(19) Europäisches Patentamt
European Patent Office
Office européen des brevets

(11) **EP 2 450 672 B1**

(12) **EUROPÄISCHE PATENTSCHRIFT**

(45) Veröffentlichungstag und Bekanntmachung des Hinweises auf die Patenterteilung:
**20.01.2016 Patentblatt 2016/03**

(51) Int Cl.:
*G01D 5/347* *(2006.01)*     *G01D 5/38* *(2006.01)*

(21) Anmeldenummer: **11185150.7**

(22) Anmeldetag: **14.10.2011**

(54) **Optische Winkelmesseinrichtung**

Optical angle measuring apparatus

Dispositif de mesure d'angle optique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2010 DE 102010043263**
**31.08.2011 DE 102011081879**

(43) Veröffentlichungstag der Anmeldung:
**09.05.2012 Patentblatt 2012/19**

(73) Patentinhaber: **Dr. Johannes Heidenhain GmbH 83301 Traunreut (DE)**

(72) Erfinder: **Holzapfel, Wolfgang, Dr. 83119 Obing (DE)**

(56) Entgegenhaltungen:
**EP-A1- 1 353 153      EP-A1- 1 435 510**
**EP-A1- 2 233 892      US-A1- 2001 017 350**

- **V.W. Stanley ET AL: "The production and performance of metrological diffraction gratings", Production Engineer, vol. 40, no. 1, 1 January 1961 (1961-01-01), page 38, XP055200154, ISSN: 0032-9851, DOI: 10.1049/tpe. 1961.0004**

**Beschreibung**

Die vorliegende Erfindung betrifft eine optische Winkelmesseinrichtung.

Hochauflösende optische Winkelmesseinrichtungen, basierend auf interferentiellen Abtastprinzipien, besitzen zumeist nur geringe Anbautoleranzen für die Teilscheibe mit der darauf angeordneten Messteilung. Eine Messeinrichtung, die dieses Problem löst, ist in der DE 10 2010 029 211.7 der Anmelderin offenbart. Durch den vorgesehenen Einsatz von Retroreflektoren und Wellenfrontkorrektoren lassen sich resultierende Wellenfrontverzerrungen minimieren, die aus der Abtastung von Radialteilungen resultieren und mit ursächlich für die nur geringen Anbautoleranzen sind. Der hierzu erforderliche Wellenfrontkorrektor ist jedoch grundsätzlich für einen bestimmten Teilungsradius der abgetasteten Messteilung bzw. eine ganz bestimmte Messanwendung zu optimieren. Als Problem ergibt sich daher, dass die entsprechende Abtastoptik der optischen Winkelmesseinrichtung demzufolge nicht universell für verschiedene abzutastende Teilungsradien bzw. nicht universell für verschiedene Messanwendungen eingesetzt werden kann.

Aufgabe der vorliegenden Erfindung ist es, eine optische Winkelmesseinrichtung mit hoher Auflösung und großen Anbautoleranzen anzugeben, die universell in Verbindung mit unterschiedlichen Teilungsradien der abgetasteten Messteilung bzw. in unterschiedlichen Messanwendungen einsetzbar ist, ohne dass hierzu signifikante Anpassungen der Abtastoptik nötig sind.

Diese Aufgabe wird erfindungsgemäß durch eine optische Winkelmesseinrichtung mit den Merkmalen des Anspruchs 1 gelöst.

Vorteilhafte Ausführungen der erfindungsgemäßen optischen Winkelmesseinrichtung ergeben sich aus den Maßnahmen in den abhängigen Ansprüchen.

Die erfindungsgemäße optische Winkelmesseinrichtung dient zur Erfassung der Relativbewegung zwischen mindestens einem Abtastgitter und einer Teilscheibe mit mindestens einer Messteilung. Hierbei ist das Abtastgitter als lineares Abtastgitter ausgebildet. Die Teilscheibe umfasst als Messteilung ein erstes und ein zweites kombiniertes Radial-Zirkulargitter und weist einen Spiegel auf. Derart erfährt ein einfallendes Strahlenbündel am Abtastgitter zunächst eine Aufspaltung in zwei Teilstrahlenbündel. Dann propagieren die Teilstrahlenbündel in Richtung des ersten kombinierten Radial-Zirkulargitters und erfahren dort eine Beugung. Die gebeugten Teilstrahlenbündel propagieren anschließend in Richtung des Spiegels und erfahren dort eine Reflexion in Richtung des zweiten kombinierten Radial-Zirkulargitters. Dann propagieren die Teilstrahlenbündel in Richtung des zweiten kombinierten Radial-Zirkulargitters und erfahren dort eine Beugung. Die gebeugten Teilstrahlenbündel propagieren schließlich in Richtung des Abtastgitters, wo eine Überlagerung der Teilstrahlenbündel resultiert.

Vorzugsweise vereinen die kombinierten ersten und zweiten Radial-Zirkulargitter zumindest eine azimutale optische Ablenkwirkung mit der optischen Wirkung einer radialen, ringförmig gebogenen Zylinderlinse. Hierbei kann das erste kombinierte Radial-Zirkulargitter derart ausgebildet sein, dass darüber neben einer longitudinalen und einer transversalen Ablenkwirkung auf die Teilstrahlenbündel ferner eine Fokussierung der Teilstrahlenbündel auf den Spiegel resultiert.

Mit Vorteil ist das zweite kombinierte Radial-Zirkulargitter derart ausgebildet, dass darüber neben einer longitudinalen und einer transversalen Ablenkwirkung auf die Teilstrahlenbündel ferner eine Re-Kollimation der in Richtung des Abtastgitters propagierenden Teilstrahlenbündel resultiert.

In einer möglichen Ausführungsform sind die kombinierten ersten und zweiten Radial-Zirkulargitter ringförmig über den Umfang der Teilscheibe angeordnet und besitzen über den Ringumfang jeweils eine konstante azimutale Gitterperiode und weisen in radialer Richtung eine variierende radiale Gitterperiode auf.

Vorzugsweise ist der Spiegel ringförmig über den Umfang der Teilscheibe angeordnet.

Es ist möglich, dass die Teilscheibe aus transparentem Material besteht und auf einer ersten Seite die kombinierten ersten und zweiten Radial-Zirkulargitter angeordnet sind und auf der entgegengesetzten zweiten Seite der Spiegel angeordnet ist, dessen Reflexionsfläche in Richtung der ersten Seite orientiert ist.

In einer möglichen Ausführungsform ist das Abtastgitter als reflektierendes Abtastgitter ausgebildet.

Vorzugsweise sind eine Lichtquelle sowie mehrere optoelektronische Detektorelemente in einer Abtasteinheit angeordnet, wobei das von der Lichtquelle emittierte Strahlenbündel dem Abtastgitter zuführbar ist und die überlagerten Teilstrahlenbündel den optoelektronischen Detektorelementen zuführbar sind.

In einer weiteren Ausführungsform ist in der Abtasteinheit ferner das Abtastgitter angeordnet und die Teilscheibe gegenüber der Abtasteinheit beweglich angeordnet.

Alternativ hierzu kann vorgesehen sein, dass gegenüber dem Abtastgitter mindestens eine Abtasteinheit verschiebbar und die Teilscheibe drehbar angeordnet ist.

In einer weiteren Variante kann mindestens eine Abtasteinheit zusammen mit dem Abtastgitter gegenüber der Teilscheibe entlang einer Achse relativ beweglich angeordnet sein, die durch das Zentrum der Teilscheibe verläuft.

Es ist ferner möglich, dass mehrere Abtasteinheiten und eine Mehrzahl den Abtasteinheiten zugeordneten Abtastgittern vorgesehen werden, wobei die Abtasteinheiten und Abtastgitter an verschiedenen Azimutalpositionen relativ zur Teilscheibe angeordnet sind.

Desweiteren kann die Teilscheibe aus mehreren Teilscheibensegmenten bestehen.

Schließlich kann auch vorgesehen werden, dass die von der Abtasteinheit kommenden Strahlenbündel über eine Ablenkeinheit in Richtung der Teilscheibe lenkbar sind und die von der Teilscheibe kommenden Strahlenbündel über die Ablenkeinheit in Richtung der Abtasteinheit lenkbar sind.

Die erfindungsgemäße optische Winkelmesseinrichtung eignet sich zur hochauflösenden, universellen Abtastung von gekrümmten Messteilungen mit unterschiedlichen Teilungsradien, ohne dass hierzu die Abtastoptik jeweils angepasst werden muss. Grundsätzlich kann die Abtastoptik der erfindungsgemäßen Winkelmesseinrichtung sogar zur Abtastung einer linearen Messteilung verwendet werden.

Ferner kann die erfindungsgemäße optische Winkelmesseinrichtung sowohl in üblichen Anwendungen zur Drehwinkelerfassung als auch zur Positionserfassung in speziellen Maschinenkinematiken eingesetzt werden, die nachfolgend noch im Detail beschrieben werden. Das heißt, die erfindungsgemäße optische Winkelmesseinrichtung ist auch in Bezug auf unterschiedlichste Anwendungen universell einsetzbar. So lässt sich damit etwa der Drehwinkel eines Rundtisches mit hoher Genauigkeit bestimmen, der auf einem Lineartisch entlang einer lateralen Richtung verschiebbar angeordnet ist. Gleichzeitig werden dabei auch die Führungsabweichungen des Lineartisches erfasst. Ferner ermöglicht die erfindungsgemäße optische Winkelmesseinrichtung in derartigen Kinematiken neben der Drehwinkel-Erfassung auch die Bestimmung der lateralen XY-Position des verschiebbaren Rundtisches. Die Drehwinkel-Erfassung als auch die optionale Erfassung der lateralen XY-Position, d.h. der kombinierten Rotations- und Linearbewegung, erfolgt hierbei im Unterschied zum Stand der Technik nicht sequentiell, sondern direkt und mit kleinem Messzirkel.

Als weitere Vorteile der erfindungsgemäßen optischen Winkelmesseinrichtung ist anzuführen, dass diese neben einer möglichen hohen Auflösung zudem bei einer relativ großen Abtastfläche auf Seiten der Messteilung gleichzeitig große Anbautoleranzen für die Teilscheibe aufweist. Weitere Vorteile sowie Einzelheiten der vorliegenden Erfindung ergeben sich aus der nachfolgenden Beschreibung von Ausführungsbeispielen anhand der beiliegenden Figuren.

Es zeigt hierbei

Figur 1      eine schematische Darstellung von Komponenten der erfindungsgemäßen optischen Winkelmesseinrichtung inklusive verschiedener geometrischer Größen;

Figur 2a, 2b      je eine Schnittansicht mit dem Abtaststrahlengang einer ersten Ausführungsform der erfindungsgemäßen optischen Winkelmesseinrichtung;

Figur 3a, 3b      jeweils den entfalteten Abtaststrahlengang der ersten Ausführungsform der erfindungsgemäßen optischen Winkelmesseinrichtung;

Figur 4a      eine Teilansicht der Unterseite der Teilscheibe aus der ersten Ausführungsform der erfindungsgemäßen optischen Winkelmesseinrichtung mit dem darauf angeordneten Spiegel;

Figur 4b      eine Teilansicht der Oberseite der Teilscheibe aus der ersten Ausführungsform der erfindungsgemäßen optischen Winkelmesseinrichtung mit den darauf angeordneten Radial-Zirkular-Gittern;

Figur 4c      eine Teilansicht der Abtastgitter der ersten Ausführungsform der erfindungsgemäßen optischen Winkelmesseinrichtung;

Figur 5      eine Darstellung zur Erläuterung der Dimensionierung der Radial-Zirkular-Gitter der ersten Ausführungsform der erfindungsgemäßen optischen Winkelmesseinrichtung;

Figur 6, 7      je eine Ansicht einer Maschine mit einer Polarkoordinaten-Kinematik, in der eine zweite Ausführungsform der erfindungsgemäßen optischen Winkelmesseinrichtung eingesetzt wird;

Figur 8a, 8b      je eine Schnittansicht mit dem Abtaststrahlengang der zweiten Ausführungsform der erfindungsgemäßen optischen Winkelmesseinrichtung;

Figur 9a, 9b      jeweils den entfalteten Abtaststrahlengang der zweiten Ausführungsform der erfindungsgemäßen optischen Winkelmesseinrichtung;

Figur 10a      eine Teilansicht der Unterseite der Teilscheibe aus der zweiten Ausführungsform der erfindungsgemäßen optischen Winkelmesseinrichtung mit dem darauf angeordneten Spiegel;

Figur 10b      eine Teilansicht der Oberseite der Teilscheibe aus der zweiten Ausführungsform der erfindungsgemäßen optischen Winkelmesseinrichtung mit den darauf angeordneten Radial-Zirkular-Gittern;

Figur 10c — eine Teilansicht der Abtastgitter der zweiten Ausführungsform der erfindungsgemäßen optischen Winkelmesseinrichtung;

Figur 11 a, 11b — je eine Schnittansicht mit dem Abtaststrahlengang einer dritten Ausführungsform der erfindungsgemäßen optischen Winkelmesseinrichtung;

Figur 12a, 12b — jeweils den entfalteten Abtaststrahlengang der dritten Ausführungsform der erfindungsgemäßen optischen Winkelmesseinrichtung;

Figur 13a — eine Teilansicht der Unterseite der Teilscheibe aus der dritten Ausführungsform der erfindungsgemäßen optischen Winkelmesseinrichtung mit dem darauf angeordneten Spiegel;

Figur 13b — eine Teilansicht der Oberseite der Teilscheibe aus der dritten Ausführungsform der erfindungsgemäßen optischen Winkelmesseinrichtung mit den darauf angeordneten Radial-Zirkular-Gittern;

Figur 13c — eine Teilansicht der Abtastgitter der dritten Ausführungsform der erfindungsgemäßen optischen Winkelmesseinrichtung;

Figur 14, 15 — je eine Schnittansicht mit dem Abtaststrahlengang einer vierten Ausführungsform der erfindungsgemäßen optischen Winkelmesseinrichtung;

Figur 16, 17 — je eine Ansicht einer Messanordnung mit einer fünften Ausführungsform der erfindungsgemäßen optischen Winkelmesseinrichtung;

Figur 18, 19 — je eine Ansicht einer weiteren Maschine mit einer Polarkoordinaten-Kinematik, in der eine sechste Ausführungsform der erfindungsgemäßen optischen Winkelmesseinrichtung eingesetzt wird.

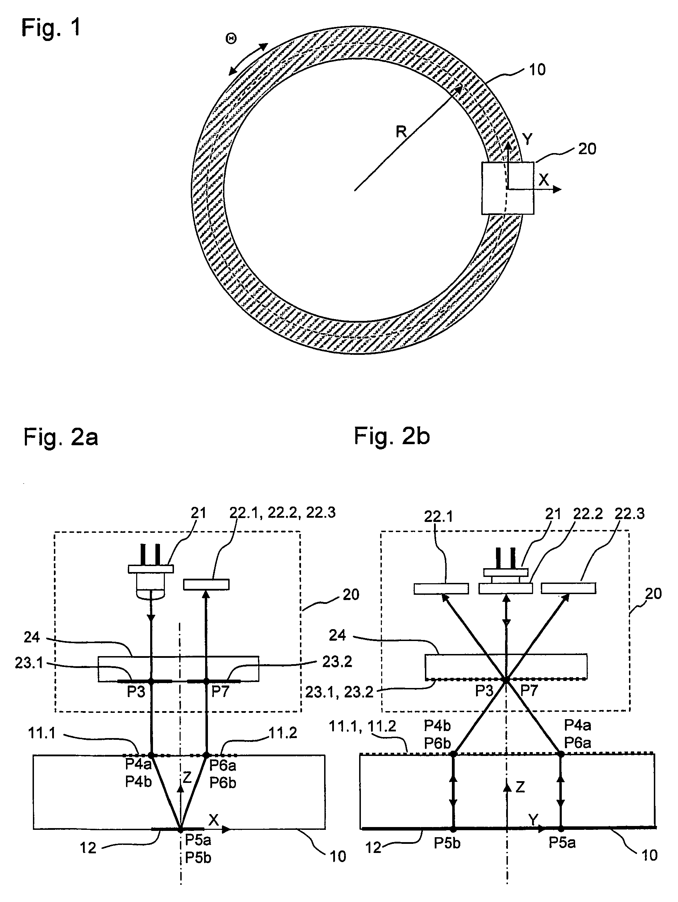

Bevor nachfolgend verschiedene konkrete Ausführungsbeispiele bzw. Anwendungsbeispiele der erfindungsgemäßen optischen Winkelmesseinrichtung im Detail erläutert werden, seien anhand von Figur 1 vorab bestimmte grundsätzliche Überlegungen erläutert. Ferner sind in Figur 1 einzelne geometrische Größen veranschaulicht, auf die im weiteren Verlauf der Beschreibung eingegangen wird.

Die erfindungsgemäße optische Winkelmesseinrichtung basiert auf einem interferentiellen Abtastprinzip und umfasst eine Abtasteinheit 20 sowie eine relativ hierzu in der XY-Ebene rotierende Teilscheibe 10 mit mindestens einer darauf angeordneten Messteilung. Die Messteilung ist hierbei in Figur 1 nicht dargestellt. Für die Bestimmung des Drehwinkels $\Theta$ der Teilscheibe 10 relativ zur Abtasteinheit 20 ist als Messteilung ein Radialgitter auf der Teilscheibe 10 vorgesehen. Das Radialgitter verzerrt im Abtaststrahlengang die Wellenfronten der gebeugten Strahlenbündel. Es sind deshalb korrigierende Abtastgitter in der Abtasteinheit 20 notwendig, um die beiden Teilstrahlenbündel zur Interferenz zu bringen und Abtastsignale mit hohem Modulationsgrad zu erzeugen. Werden große Montage- und Betriebstoleranzen bzgl. der Relativlage von Teilscheibe 10 und Abtasteinheit 20 gewünscht, so ist es grundsätzlich möglich, zusätzliche Retroreflexionselemente und Wellenfrontkorrektoren im Abtaststrahlengang in der Abtasteinheit anzuordnen. Hierzu sei etwa auf die bereits eingangs erwähnte DE 10 2010 029 211.7 der Anmelderin verwiesen. Grundsätzlich ist hierbei eine spezielle Anpassung der optischen Elemente der Abtasteinheit 20 an den Teilungsradius R der Messteilung der Teilscheibe 10 notwendig.

Die vorliegende Erfindung schlägt nunmehr eine Abtastoptik vor, die die Funktion der Retroreflexionselemente und der Wellenfrontkorrektoren aus der DE 10 2010 029 211.7 in einer Messteilung, ausgebildet als kombiniertes Radial-Zirkulargitter auf der Teilscheibe 10, implementiert. Als Abtastgitter ist in der Abtasteinheit 20 nur mehr ein lineares Gitter erforderlich. Auf diese Weise kann ein und dieselbe Abtasteinheit 20 zur Abtastung verschiedener Teilscheiben 10 mit unterschiedlichen Teilungsradien R der darauf angeordneten Messteilung verwendet werden. Darüberhinaus ist es sogar möglich, die Abtasteinheit 20 der erfindungsgemäßen optischen Winkelmesseinrichtung aufgrund des linearen Abtastgitters auch zur Abtastung einer Maßverkörperung mit einer linearen Messteilung ($R \rightarrow \infty$) zu verwenden. Eine hierzu geeignete Maßverkörperung ist etwa in der WO 2008/138502 A1 der Anmelderin offenbart.

Da das Abtastgitter als lineares Gitter ausgebildet ist, hat eine laterale Verschiebung dieses Abtastgitters keinen Einfluss auf die Signalstärke der Abtastsignale. Es kann deshalb auch von der Abtasteinheit 20 räumlich getrennt angeordnet und in seiner Längs- oder Querausdehnung beliebig vergrößert werden. Das heißt, dass über die erfindungsgemäße Winkelmesseinrichtung somit die Relativbewegung zwischen dem Abtastgitter und einer Teilscheibe mit der darauf angeordneten Messteilung bzw. zwischen den mit Abtastgitter und Teilscheibe verbundenen Maschinenkomponenten bestimmbar ist. Auf diese Weise ist es möglich, in einer besonderen Ausführungsform der erfindungsgemäßen optischen Winkelmesseinrichtung eine Winkelmessung auch bei einer großen lateralen XY-Verschiebung der Teilscheibe relativ zum Abtastgitter durchzuführen. Die zulässige laterale XY-Verschiebung ist hierbei nur durch die Größe des Abtastgitters begrenzt, wenn die Abtasteinheit 20 mit der Teilscheibe 10 mitverschoben aber nicht mitgedreht wird. Die Signalstärke der Abtastsignale ist innerhalb dieses Bereiches gleichbleibend hoch. Diese Ausführungsform der erfindungsgemäßen optischen Winkelmesseinrichtung eignet sich daher besonders für die oben erwähnten Maschinen mit speziellen Kinematiken. Durch die Anordnung mehrerer Abtasteinheiten und gegebenenfalls auch mehrerer Abtastgitter ist hierbei auch die gleichzeitige Bestimmung der lateralen XY-Verschiebung möglich.

**Erste Ausführungsform**

Fig. 2a und 2b zeigen je eine Schnittansicht mit dem Abtaststrahlengang einer ersten Ausführungsform der erfindungsgemäßen optischen Winkelmesseinrichtung.

Eine in der Abtasteinheit 20 angeordnete, kollimierte Lichtquelle 21, z.B. eine geeignete Laser-Lichtquelle, beleuchtet entlang der optischen Achse Z ein erstes lineares Abtastgitter 23.1, das auf der Unterseite einer Abtastplatte 24 aufgebracht ist. Als Unterseite der Abtastplatte 24 sei hierbei diejenige Seite der Abtastplatte 24 verstanden, die der abgetasteten Teilscheibe 10 zugewandt ist; als Oberseite sei die hierzu entgegengesetzte Seite der Abtastplatte bezeichnet. Das einfallende Strahlenbündel wird am Ort P3 des Abtastgitters 24 in zwei Teilstrahlenbündel aufgespalten. Beide Teilstrahlenbündel propagieren sodann in Richtung eines ersten Teils der Messteilung, der als erstes kombiniertes Radial-Zirkulargitter 11.1 ausgebildet und auf der Vorderseite der Teilscheibe 10 angeordnet ist. An den Orten P4a bzw. P4b treffen die Teilstrahlenbündel hierbei auf das erste kombinierte Radial-Zirkulargitter 11.1.

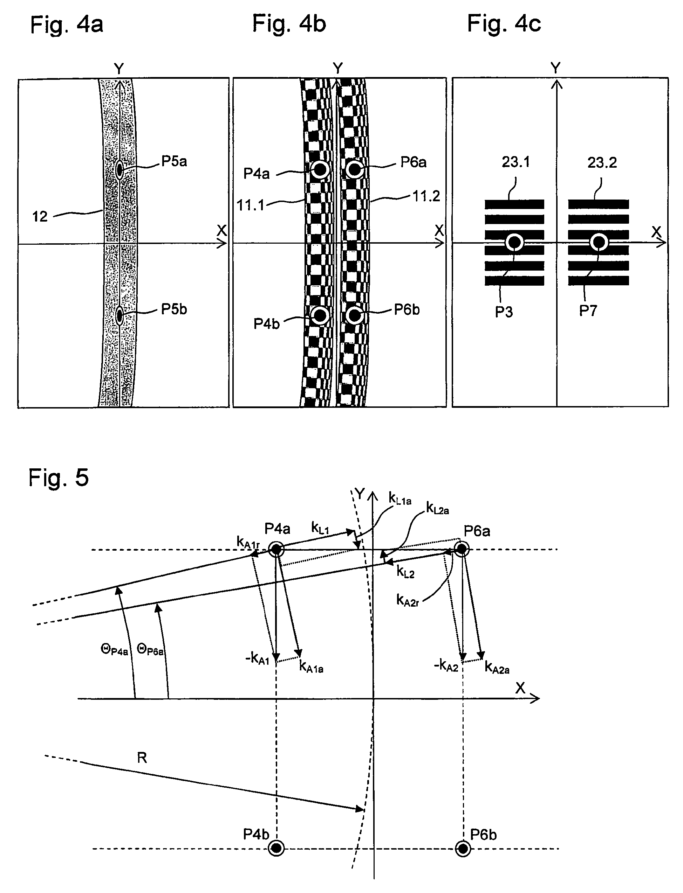

Das erste kombinierte Radial-Zirkulargitter 11.1 ist ringförmig über den Umfang der Teilscheibe 10 angeordnet und als Durchlichtgitter ausgebildet. Es vereinigt erfindungsgemäß mehrere optische Funktionen: Es lenkt die darauf auftreffenden beiden Teilstrahlenbündel in der YZ-Ebene wieder parallel zur optischen Achse Z (longitudinale Ablenkwirkung) und lenkt sie in der X-Richtung ab (transversale Ablenkwirkung). Darüber hinaus fokussiert es die beiden auftreffenden Teilstrahlenbündel durch eine radiale Zylinderlinsenwirkung in radialer Richtung auf einen Spiegel 12, der sich auf der Rückseite der transparenten Teilscheibe 10 befindet. Der Spiegel ist hierbei - wie in der Teilansicht aus Figur 4a ersichtlich - ringförmig über den Umfang der Teilscheibe 10 angeordnet.

Die von dem ersten kombinierten Radial-Zirkulargitter 11.1 gebeugten bzw. wie vorab erläutert beeinflussten Teilstrahlenbündel propagieren somit in Richtung des Spiegels 12 und erfahren dort an den Orten P5a bzw. P5b auf dem Spiegel 12 eine Reflexion in Richtung eines zweiten Teils der Messteilung, nämlich auf ein zweites kombiniertes Radial-Zirkulargitter 11.2 auf der Teilscheibe 10. Nach der Reflexion an den Orten P5a bzw. P5b auf dem Spiegel 12 propagieren die Teilstrahlenbündel somit in Richtung des zweiten kombinierten Radial-Zirkulargitters 11.2 auf der Teilscheibe 10. Auch das zweite kombinierte Radial-Zirkulargitter 11.2 vereinigt erfindungsgemäß mehrere optische Funktionen: Es lenkt die beiden darauf einfallenden Teilstrahlenbündel in der YZ-Ebene wieder in entgegengesetzter Richtung ab (longitudinale Ablenkwirkung), so dass sie am gemeinsamen Ort P7 auf das zweite Abtastgitter 23.2 der Abtastplatte 24 treffen. Zudem werden die beiden Teilstrahlenbündel in der XZ-Ebene wieder parallel zur optischen Achse Z gerichtet (transversale Ablenkwirkung). Außerdem erfolgt über eine optische Zylinderlinsenwirkung eine Re-Kollimation der beiden Teilstrahlenbündel.

Im vorliegenden Ausführungsbeispiel besteht die Teilscheibe 10 aus einem transparenten Material. Auf einer ersten Seite (Oberseite) der Teilscheibe 10 sind die kombinierten ersten und zweiten Radial-Zirkulargitter angeordnet; auf der entgegengesetzten zweiten Seite (Unterseite) der Teilscheibe 10 ist der Spiegel 12 angeordnet, dessen Reflexionsfläche in Richtung der ersten Seite orientiert ist.

Nach der Beugung bzw. Beeinflussung am zweiten kombinierten Radial-Zirkulargitter 11.2 propagieren die Teilstrahlenbündel in Richtung des linearen Abtastgitters 23.3, wo diese überlagert bzw. zur Interferenz gebracht und in drei jeweils kombinierte Teilstrahlenbündel aufgespalten werden. Die drei kombinierten Teilstrahlenbündel treten in resultierender 0. und $\pm 1$. Beugungsordnung aus dem Abtastgitter 23.2 aus und gelangen auf optoelektronische Detektorelemente 22.1, 22.2 und 22.3 in der Abtasteinheit 20, die verschiebungsabhängig modulierte Abtastsignale liefern. Durch eine besondere Ausgestaltung des zweiten linearen Abtastgitters 23.2 kann erreicht werden, dass die Abtastsignale zueinander jeweils um 120° phasenverschoben sind. Dazu wird es in bekannter Weise als Phasengitter ausgebildet, dessen Steghöhe entsprechend einer Phasenverschiebung ungleich 180° gewählt wird und dessen Stegbreiten von der halben Gitterperiode abweichen. Die Abtastsignale werden anschließend - nicht dargestellten - Auswerteeinheiten zugeführt, die daraus Positionswerte erzeugen.

Im vorliegenden ersten Ausführungsbeispiel sind somit neben der Lichtquelle 21 und den optoelektronischen Detektorelementen 22.1, 22.2, 22.3 ferner die linearen Abtastgitter 23.1, 23.2 in der Abtasteinheit 20 angeordnet. Das von der Lichtquelle 21 emittierte Strahlenbündel ist hierbei dem ersten Abtastgitter 23.1 zuführbar, die überlagerten Teilstrahlenbündel sind vom zweiten Abtastgitter 23.2 den optoelektronischen Detektorelementen 22.1, 22.2, 22.3 zuführbar. Die Teilscheibe 10 ist gegenüber der Abtasteinheit 20 relativbeweglich angeordnet, nämlich drehbar um die zentrale Achse der Teilscheibe 10, die parallel zur optischen Achse Z durch den Mittelpunkt der Teilscheibe 10 verläuft.

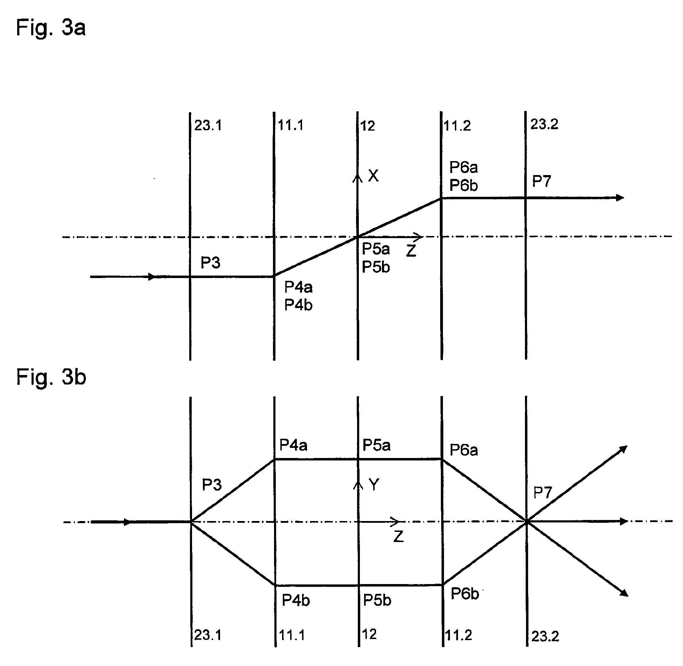

In den Figuren 3a und 3b ist der Abtaststrahlengang dieses Ausführungsbeispiels in gestreckter bzw. entfalteter Form dargestellt. In Figur 3a ist hierbei die transversale Ablenkwirkung der kombinierten Radial-Zirkulargitter 11.1 und 11.2 an den Orten P4a, P4b und P6a, P6b zu erkennen, die einen Strahlversatz für die Teilstrahlenbündel in X-Richtung ergibt. In Figur 3b ist die Aufspaltung über das erste Abtastgitter 23.1 in zwei Teilstrahlenbündel am Ort P3, die longitudinale Ablenkwirkung über die kombinierten Radial-Zirkulargitter 11.1 und 11.2 an den Orten P4a, P4b und P6a, P6b sowie die Überlagerung der beiden Teilstrahlenbündel am Ort P7 des zweiten Abtastgitters 23.2 dargestellt.

Figur 4a zeigt eine Draufsicht bzw. Teilansicht des ringförmig gebogenen Spiegels 12 auf der Unterseite der Teilscheibe 10 und die beiden Teilstrahlenbündel, die durch die Zylinderlinsenwirkung des kombinierten Radial-Zirkulargitters 11.1 linienförmig fokussiert an den Orten P5a und P5b reflektiert werden.

In Figur 4b sind die ringförmigen kombinierten Radial-Zirkulargitter 11.1 und 11.2 auf der Oberseite der Teilscheibe 10 in einer schematisierten Teilansicht gezeigt. Die lokal schachbrettartige Struktur dieser Gitter 11.1, 11.2 ist vorteilhafterweise als Phasengitter ausgebildet mit einer Phasenhöhe von 180°. In azimutaler Richtung, d.h. entlang der Ringform ist sie wie ein Radialgitter periodisch strukturiert. Dementsprechend weist das Gitter 11.1 über dem Umfang N1 und das Gitter 11.2 N2 azimutale Gitterperioden auf. In radialer Richtung entspricht die Gitterstruktur derjenigen einer diffraktiven, ringförmig gebogenen Zylinderlinse. Sie kann deshalb als Zirkulargitter betrachtet werden, dessen radiale Gitterperiode entsprechend radial variiert.

Figur 4c zeigt eine Teilansicht der beiden linearen Abtastgitter 23.1 und 23.2 auf der Unterseite der Abtastplatte 24. Beide Abtastgitter 23.1, 23.2 weisen in dieser Ausführungsform dieselbe Gitterkonstante und Gitterorientierung auf. Die besondere Ausgestaltung des Abtastgitters 23.2 wurde bereits oben beschrieben. Das Abtastgitter 23.1 ist vorzugsweise als Phasengitter mit 180° Phasenhub und Stegbreiten nahezu gleich der halben Gitterkonstante ausgebildet. Grundsätzlich ist es auch möglich, für das Abtastgitter 23.1 dieselbe Gitterstruktur wie für das Abtastgitter 23.2 zu wählen, so dass beide Abtastgitter auch als gemeinsames Abtastgitter ausgeführt sein können.

Anhand von Figur 5 soll nachfolgend die spezielle Dimensionierung der kombinierten ersten und zweiten Radial-Zirkulargitter 11.1 und 11.2 näher erläutert werden. Dazu werden die X- und Y-Komponenten der k-Vektoren der beiden Teilstrahlenbündel betrachtet. Das am Ort P4a eintreffende Teilstrahlenbündel weist durch die Beugung am linearen Abtastgitter 23.1 mit der Gitterkonstanten $d_A$ einen k-Vektor $k_{A1}$ mit

$$k_{A1} = \begin{pmatrix} 0 \\ \frac{2\pi}{d_{A1}} \end{pmatrix} \qquad \text{(Gl. 1)}$$

auf.

Dieser k-Vektor soll zunächst durch eine erste Ablenkfunktion d.h. durch einen Gittervektor $-k_{A1}$ des kombinierten Radial-Zirkulargitters 11.1 kompensiert werden. Dazu wird dieser Gittervektor $-k_{A1}$ in eine radiale Komponente $k_{A1r}$ und eine azimutale Komponente $k_{A1a}$ zerlegt. Die radiale Komponente $k_{A1r}$ kann durch eine entsprechende radiale Gitterkonstante und die azimutale Komponente $k_{A1a}$ durch eine entsprechende azimutale Gitterkonstante erzielt werden. Die erste Ablenkfunktion alleine würde das eintreffende Teilstrahlenbündel parallel zur optischen Achse Z lenken. Dem wird eine radiale Zylinderlinsenwirkung überlagert, die durch eine entsprechende Gitterphase $\Phi_L(r)$ gemäß nachfolgender Beziehung beschrieben wird:

$$\Phi_L(r) = -\frac{2\pi}{\lambda} \cdot n_T \cdot \sqrt{(r - R)^2 + \Delta a^2 + z_T{}^2}, \qquad \text{(Gl. 2)}$$

mit

$\lambda$     Wellenlänge der Laserlichtquelle
$n_T$     Brechungsindex der Teilscheibe
$R$     Teilungsradius der Teilscheibe
$\Delta a$     azimutaler Verschiebung des Fokusortes (siehe unten)
$z_T$     Dicke der Teilscheibe

Der Fokusort dieser Zylinderlinse liegt am Teilungsradius R. Durch den Abstand des Auftreffpunktes P4a vom Teilungsradius R lenkt diese Zylinderlinse das Teilstrahlenbündel radial ab. Der zugehörige Gittervektor dieser Ablenkung wird mit $k_{L1}$ bezeichnet:

$$k_{L1} = \nabla\Phi_L(r_{P4a}) \qquad \text{(Gl. 3)}$$

mit

$r_{P4a}$      Radius des Auftreffortes P4a.

Wenn wie in diesem Ausführungsbeispiel die Zylinderlinsenwirkung nur eine Ablenkung in X-Richtung hervorrufen soll, muss die Y-Komponente des Gittervektors $k_{L1}$ durch einen entsprechenden azimutalen Gittervektor $k_{L1a}$ kompensiert werden. Dieser azimutale Gittervektor $k_{L1a}$ ergibt eine entsprechende azimutale Verschiebung $\Delta a$ des Fokusortes. Zur Optimierung der Abbildungsqualität der Zylinderlinse sollte diese azimutale Verschiebung $\Delta a$ in der Gitterphase $\Phi_L(r)$ nach obiger Formel berücksichtigt werden.

Die Struktur des kombinierten Radial-Zirkulargitters 11.1 ergibt sich aus der Überlagerung aller azimutalen und radialen Ablenkwirkungen und der Zylinderlinsenwirkung. Der resultierende azimutale Gittervektor $k_{A1a}+k_{L1a}$ kann in eine azimutale Anzahl von Perioden N1 über den Umfang umgerechnet werden:

$$N1 = round((k_{A1a} + k_{L1a}) \cdot r_{P4a}) \qquad \text{(Gl. 4)}$$

Der Fehler durch die Rundungsfunktion *round* kann dabei vernachlässigt werden. Die zugehörige azimutale Gitterphase $\Phi_{1a}(\Theta)$ ergibt sich zu:

$$\Phi_{1a}(\Theta) = N_1 \cdot \Theta \qquad \text{(Gl. 5)}$$

Mit dem radialen Gittervektoren $k_{A1r}$, der die radiale Ablenkwirkung beschreibt, und der Gitterphase $\Phi_L(r)$ für die Zylinderlinsenwirkung erhält man die radiale Gitterphase $\Phi_{1r}(r)$:

$$\Phi_{1r}(r) = \Phi_L(r) + k_{A1r} \cdot r \qquad \text{(Gl. 6)}$$

Durch Quantisieren dieser Gitterphasen lässt sich eine entsprechende Phasengitterstruktur des kombinierten Radial-Zirkulargitters 11.1 berechnen. Beispielsweise kann für eine binäre Gitterstruktur das Quantisieren dadurch erfolgen, dass die Gitterstege an allen Stellen mit

$$\cos(\Phi_{1r}(r)) \cdot \cos(\Phi_{1a}(\Theta)) > 0 \qquad \text{(Gl. 7)}$$

vorgesehen sind und an allen anderen Stellen entsprechend Lücken. Natürlich sind auch andere Quantisierungsvorschriften möglich. Letztendlich muss die lokale Periodizität der Gitterstruktur durch die Periodizität der Funktionen $\cos(\Phi_{1r}(r))$ und $\cos(\Phi_{1a}(\Theta))$ gegeben sein. Besonders große Abtastsignale lassen sich erreichen, wenn die radiale Gitterphase $\Phi_{1r}(r)$ durch eine geblazte Gitterstruktur approximiert wird.

Die Struktur des kombinierten Radial-Zirkulargitters 11.2 lässt sich in analoger Weise berechnen. Die Zylinderlinsenwirkung wird durch dieselbe Gitterphase $\Phi_L(r)$ beschrieben. Dessen radiale Ablenkung wird durch den Gittervektor $k_{L2}$ beschrieben:

$$k_{L2} = \nabla\Phi_L(r_{P6a}) \qquad \text{(Gl. 8)}$$

mit

$r_{P6a}$      Radius des Auftreffortes P6a

Wenn wiederum die Zylinderlinsenwirkung nur eine Ablenkung in X-Richtung hervorrufen soll, muss die azimutale Komponente durch einen entsprechenden azimutalen Gittervektor $k_{L2a}$ kompensiert werden. Durch die kombinierte Wirkung des azimutalen Gittervektors $k_{L2a}$ und der Gitterphase $\Phi_L(r)$ wird das einfallende Teilstrahlenbündel wieder kollimiert und parallel zur optischen Achse Z gerichtet. Die weitere Ablenkung des Teilstrahlenbündels muss nun so erfolgen, dass eine Überlagerung der beiden Teilstrahlenbündel durch das zweite Abtastgitter 23.2 mit dem Gittervektor $k_{A2}$ erfolgen kann. Der zugehörige Gittervektor dieser Ablenkung muss deshalb $-k_{A2}$ sein. In dieser Ausführungsform weisen die beiden Abtastgitter 23.1 und 23.2 dieselbe Gitterkonstante auf, so dass $k_{A2}= k_{A1}$ gilt. Der Gittervektor $-k_{A2}$ wird wiederum in eine azimutale Komponente $k_{A2a}$ und eine radiale Komponente $k_{A2r}$ zerlegt. Analog zu oben ergibt sich damit für die zweite kombinierte Radial-Zirkularteilung 11.2 eine azimutale Anzahl N2 von Perioden, sowie eine azimutale Gitterphase $\Phi_{2a}(\Theta)$ und eine radiale Gitterphase $\Phi_{2r}(r)$ mit:

$$N2 = round((k_{A2a} + k_{L2a}) \cdot r_{P6a}) \qquad \text{(Gl. 9)}$$

$$\Phi_{2a}(\Theta) = N_2 \cdot \Theta \qquad \text{(Gl. 10)}$$

$$\Phi_{2r}(r) = \Phi_L(r) + k_{A2r} \cdot r \qquad \text{(Gl. 11)}$$

Für die Berechnung der Gitterstruktur ist wiederum ein Quantisieren dieser Gitterphasen erforderlich und erfolgt wie oben beschrieben.

Auch das zweite Teilstrahlenbündel, das am Ort P4b auf das erste kombinierte Radial-Zirkulargitter 11.1 und am Ort P6b auf das zweite kombinierte Radial-Zirkulargitter 11.2 trifft, muss symmetrisch zum ersten Teilstrahlenbündel übertragen werden. Deshalb muss die azimutale Gitterperiode eine radiale Symmetrieachse aufweisen. Das oben beschriebene Quantisieren liefert eine solche radiale Symmetrieachse automatisch.

Natürlich können die Gittervektoren $k_{A1}$ und $k_{A2}$ der beiden Abtastgitter 23.1 und 23.2 auch unterschiedlich gewählt werden. Das bedingt entsprechend angepasste Gitterstrukturen der kombinierten Radial-Zirkulargitter 11.1, 11.2 nach den obigen Formeln. Wenn die Gittervektoren sehr stark unterschiedlich gewählt werden, sollte auch ein Strahlversatz in Y-Richtung zwischen den Auftrefforten P4a und P6a bzw. P4b und P6b so erfolgen, dass beide Teilstrahlenbündel wieder auf denselben Ort P7 zusammentreffen. Die azimutalen Gittervektoren $k_{L1a}$ und $k_{L2a}$ sind dann entsprechend anzupassen, was für den Fachmann leicht möglich ist. Eine Verbesserung der Abbildungsqualität der beiden Zylinderlinsenwirkungen lässt sich durch eine Optimierung mithilfe eines Raytracing-Modells erzielen. So lassen sich Modellparameter wie $\Delta a$ und der Fokusradius R für beide Zylinderlinsenwirkungen unterschiedlich optimieren.

Die obige Berechnung der verschiedenen optischen Ablenk- und Zylinderlinsenwirkungen berücksichtigt zunächst nur die Hauptstrahlen der Teilstrahlenbündel. Wellenfrontdeformationen über die laterale Ausdehnung der Strahlenbündel hinweg bestimmen jedoch in der Praxis die Verwendbarkeit einer Abtastoptik. Nur wenn diese Wellenfrontdeformationen äußerst klein sind, werden auswertbare Abtastsignale mit gutem Modulationsgrad erzeugt. Dass diese Wellenfrontdeformationen tatsächlich äußerst klein sind, liegt an zwei Besonderheiten der erfindungsgemäßen Abtastoptik. Zum einen wandeln die beiden kombinierten Radial-Zirkulargitter 11.1 und 11.2 die einfallenden ebenen Wellenfronten wieder in ebene Wellenfronten um. Diese überraschende Eigenschaft hängt mit der Abbildung durch ihre radialen Zylinderlinsenwirkungen zusammen, die einen Abbildungsmaßstab von -1 ergibt. Dadurch wird die auf der Innenseite (zu kleinerem Radius hin) des Gitters 11.1 kleinere azimutale Gitterperiode auf die Außenseite des Gitters 11.2 abgebildet, wo die azimutale Gitterperiode entsprechend größer ist. Umgekehrt wird die größere azimutale Gitterperiode auf der Außenseite des Gitters 11.1 auf die Innenseite des Gitters 11.2 abgebildet, das eine kleinere azimutale Gitterperiode aufweist. Die radial variierende azimutale Ablenkwirkung des ersten Gitters 11.1 wird durch Abbildung und die radial variierende azimutale Ablenkwirkung des zweiten Gitters 11.2 kompensiert. Es ergibt sich somit eine azimutale Ablenkwirkung, die näherungsweise nicht mehr vom Radius R abhängt. Dadurch wird ein kollimiertes Teilstrahlenbündel wieder in ein solches übertragen. Die Retroreflexion, die durch die Zylinderlinsenwirkungen in radialer Richtung mit einem Abbildungsmaßstab von -1 erzeugt wird und die Wellenfrontkorrektur erfolgen damit durch die Gitter 11.1 und 11.2 der Teilscheibe selbst und nicht wie in der DE 10 2010 029 211.7 durch entsprechende optische Elemente der Abtasteinheit 20.

Eine weitere vorteilhafte Besonderheit der erfindungsgemäßen Winkelmesseinrichtung stellt die Verwendung von linearen Abtastgittern 23.1 und 23.2 anstatt der in Winkelmesseinrichtungen ansonsten üblichen radialen Abtastgitter dar. Damit sind die Wellenfronten der Teilstrahlenbündel bei der Propagation von der Abtasteinheit 20 zur Teilscheibe 10 eben und behalten diese ebene Wellenfront auch bei einer Änderungen des Abtastabstandes bei. Dies gilt auch für die Propagation von der Teilscheibe 10 zurück zur Abtasteinheit 20. Die Abtastoptik erlaubt dadurch besonders große Toleranzen bzgl. des Abtastabstandes. Dies ist im Gegensatz zu den bisher bekannten Abtastoptiken, bei denen die Teilstrahlenbündel bei der Propagation von der Abtasteinheit zur Teilscheibe oder bei der Propagation zurück nichtebene, verzerrte Wellenfronten aufweisen. Da sich die Wellenfrontverzerrung bei der Propagation verändert, sind diese bekannten Abtastoptiken wesentlich empfindlicher gegenüber Änderungen des Abtastabstandes. Die entsprechenden Anbautoleranzen sind klein.

Die Zahl der Signalperioden $N_{SP}$ der erfindungsgemäßen Winkelmesseinrichtung über eine volle 360°-Drehung wird durch die Anzahlen N1 und N2 von azimutalen Perioden bestimmt:

$$N_{SP} = 2 \cdot N_1 \cdot N_2 \qquad \text{(Gl. 12)}$$

Weitere Varianten der erfindungsgemäßen Abtastoptik können durch eine (auch ungleiche) Verdrehung der Gitterrichtungen der beiden linearen Abtastgitter 23.1 und 23.2 erzeugt werden. Die zugehörigen kombinierten Radial-Zirkulargitter 11.1 und 11.2 können trotzdem nach den obigen Formeln berechnet werden.

### Zweite Ausführungsform

Die erfindungsgemäße Winkelmesseinrichtung gestattet neben der universellen Abtastung von Messteilungen mit unterschiedlichen Teilungsradien auch den Einsatz in Anwendungen mit speziellen Maschinenkinematiken. Derartige Maschinenkinematiken und die dabei resultierenden Anforderungen hinsichtlich der Positionserfassung seien nachfolgend kurz erläutert.

So erfordern Präzisionsmaschinen oftmals eine Positionierung eines Objekts relativ zu einem Werkzeug oder einem Sensor in einer Ebene. Dazu wird meist ein Tisch verwendet, der in einer X- und in einer Y-Richtung verschiebbar ist und entweder das Objekt oder das Werkzeug bzw. den Sensor trägt. Dazu muss das Objekt mit Hilfe eines Rundtisches gedreht und zusätzlich durch einen Lineartisch linear verschoben werden. Ein solcher Maschinenaufbau bzw. eine solche Kinematik ist z.B. aus der US 6,320,609 B1 bekannt wird im Folgenden auch als Polarkoordinaten-Kinematik bezeichnet.

Die konstante Drehbewegung führt in derartigen Kinematiken zu konstanten Beschleunigungskräften und damit konstanten Deformationen, die kalibriert werden können. Allerdings gibt es für hohe Genauigkeitsanforderungen bisher keine geeigneten Messmittel zur Bestimmung der Relativposition von Objekt und Werkzeug bzw. Objekt und Sensor.

Bislang werden in solchen Polarkoordinaten-Kinematiken zwei Positionsmesseinrichtungen eingesetzt, die zumeist als optische Positionsmesseinrichtungen ausgebildet sind. Die Position des Lineartisches wird hierbei mit Hilfe einer linearen Positionsmesseinrichtung bestimmt; die Erfassung des Drehwinkels des auf dem Lineartisch montierten Rundtisches erfolgt mittels einer Winkelmesseinrichtung. Die Positions- und Winkelmessung erfolgt hierbei üblicherweise sequentiell. Der Messzirkel ist deshalb entsprechend groß und driftempfindlich. Zudem werden Führungsabweichungen des Lineartisches und des Rundtisches nicht erfasst. Die über ein solches Messkonzept erzielbare Genauigkeit ist demzufolge sehr begrenzt. Die erfindungsgemäße optische Winkelmesseinrichtung ist neben üblichen Drehwinkelerfassungs-Anwendungen nunmehr auch in derartigen Maschinenaufbauten zur Positionserfassung einsetzbar.

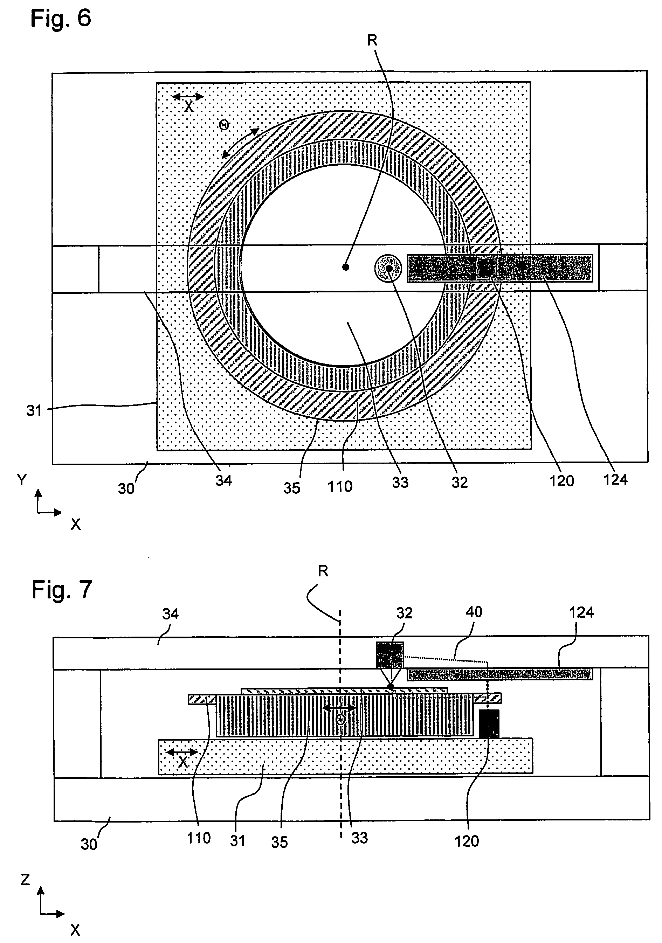

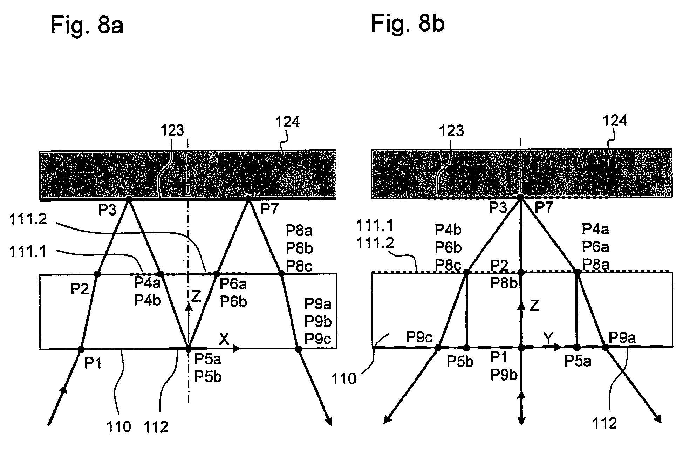

In den Figuren 6 und 7 ist eine Maschine mit der vorab erwähnten Polarkoordinaten-Kinematik schematisiert dargestellt, in der eine zweite Ausführungsform der erfindungsgemäßen optischen Winkelmesseinrichtung eingebaut ist. Diese wird anhand der Figuren 8a, 8b, 9a, 9b sowie 10a, 10b analog zu den Darstellungen aus dem ersten Ausführungsbeispiel erläutert.

Sowohl beim vorliegenden zweiten Ausführungsbeispiel als auch bei den nachfolgenden Ausführungsbeispielen seien jeweils lediglich die maßgeblichen Unterschiede zum vorab beschriebenen ersten Ausführungsbeispiel bzw. zu den anderen Ausführungsbeispielen erläutert.

Auf einem ortsfesten Maschinenbett 30 ist ein Lineartisch 31 angeordnet, der entlang der X-Richtung verschiebbar ist. Weder die hierzu erforderlichen Führungs- noch die Antriebselemente sind hierbei in den Figuren dargestellt. Auf dem Lineartisch 31 ist ein Rundtisch 35 befestigt, der um eine zentrale Rotationsachse R drehbar ist. Der Rundtisch 35 mit einem Objekt 33 kann gegenüber einem ortsfesten Sensor 32, z.B. ein Mikroskop, durch eine überlagerte Linear- und Drehbewegung spiralförmig bewegt werden. Auf einer ortsfesten Brücke 34, die mit dem Maschinenbett 30 verbunden ist, ist neben dem Sensor 32 auch eine Abtastplatte 124 mit einem linearen Abtastgitter 123 angebracht. Auf dem Rundtisch 35 ist benachbart zum Objekt 33 eine Teilscheibe 110 mit einer Messteilung angeordnet. Eine Abtasteinheit 120 tastet im Kreuzungspunkt von Teilscheibe 110 und Abtastplatte 124 die beiden darauf befindlichen Teilungen ab und erzeugt Abtastsignale, die eine Bestimmung des Drehwinkels Θ des Rundtisches bei jeder X-Position des Lineartisches 31 erlauben. Die Abtasteinheit 120 ist dazu auf dem Lineartisch 31 befestigt.

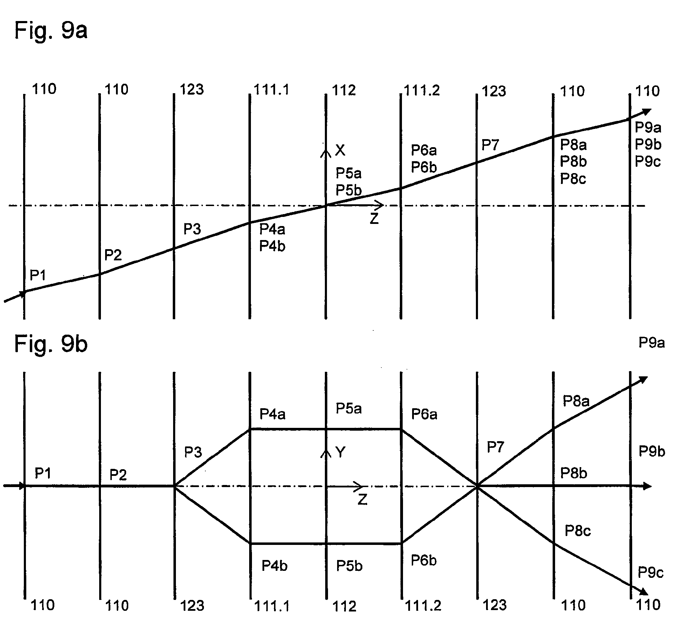

Der Abtaststrahlengang bzw. die Abtastoptik der zweiten Ausführungsform der erfindungsgemäßen Winkelmesseinrichtung ist in den Figuren 8a und 8b gezeigt; eine gestreckte Darstellung des Strahlenverlaufs findet sich wiederum in den Figuren 9a und 9b.

Im Unterschied zur ersten Ausführungsform ist die Abtastplatte 124 bzw. das Abtastgitter 123 nunmehr außerhalb der Abtasteinheit 120 angeordnet. Die Abtasteinheit 120 umfasst demzufolge in diesem Ausführungsbeispiel eine Lichtquelle und mehrere optoelektronische Detektorelemente, die in den Figuren jeweils nicht dargestellt sind.

Wie aus den Figuren 6 und 7 ersichtlich, ist gegenüber dem Abtastgitter bzw. der Abtastplatte 124 mindestens eine Abtasteinheit 120 verschiebbar und die Teilscheibe 110 zusätzlich drehbar angeordnet. Am Rundtisch 35 ist hierbei die Teilscheibe 110 angeordnet, auf dem Lineartisch 31 die Abtasteinheit 120 und am ortsfesten Maschinenbett 30 die Abtastplatte 124 mit dem Abtastgitter.

Die Abtastplatte 124 trägt hierbei ein reflektierendes lineares Abtastgitter 123, das in der Bewegungsrichtung X des Lineartisches 31 ausgedehnt ist, d.h. die Längsrichtung der Teilungsstriche erstreckt sich entlang der Bewegungsrichtung X des Lineartisches. Das kollimierte Strahlenbündel der - nicht dargestellten - Lichtquelle trifft in der XZ-Ebene zunächst am Ort P1 geneigt auf die Teilscheibe 110. Die Teilscheibe 110 transmittiert das Strahlenbündel über den Ort P2, so dass es am Ort P3 auf das reflektierende, lineare Abtastgitter 123 trifft, das es in zwei Teilstrahlenbündel aufspaltet und in Y-Richtung ablenkt. In X-Richtung versetzt gelangen sie am Ort P4a, P4b zum ersten kombinierten Radial-Zirkulargitter 111.1 der Teilscheibe 110. Dieses richtet beide Teilstrahlenbündel in der YZ-Ebene wieder parallel zur optischen Achse Z und fokussiert sie in X-Richtung durch eine überlagerte Zylinderlinsenwirkung auf die Orte P5a, P5b auf einem Spiegel 112 auf der Rückseite der Teilscheibe 110. Nach der Reflexion gelangen die Teilstrahlenbündel an den Orten P6a, P6b auf die zweite kombinierte Radial-Zirkularteilung 111.2, die sie wieder durch eine Zylinderlinsenwirkung in X-Richtung re-kollimiert und durch eine überlagerte Ablenkwirkung in der YZ-Ebene entgegengesetzt zu den einfallenden Teilstrahlenbündeln zurücklenkt. Beide Teilstrahlenbündel treffen dadurch auf einen gemeinsamen Punkt P7 auf dem reflektierenden Abtastgitter 123, werden dort überlagert und treten als überlagerte Teilstrahlenbündel über die Orte P8a, P8b, P8c und P9a, P9b, P9c der Abtastplatte 124 in resultierender 0. und $\pm$1. Beugungsordnung aus. Die Detektion durch optoelektronische Detektorelemente in der Abtasteinheit 120 entspricht der ersten Ausführungsform und ist in den Figuren zu diesem Ausführungsbeispiel nicht dargestellt.

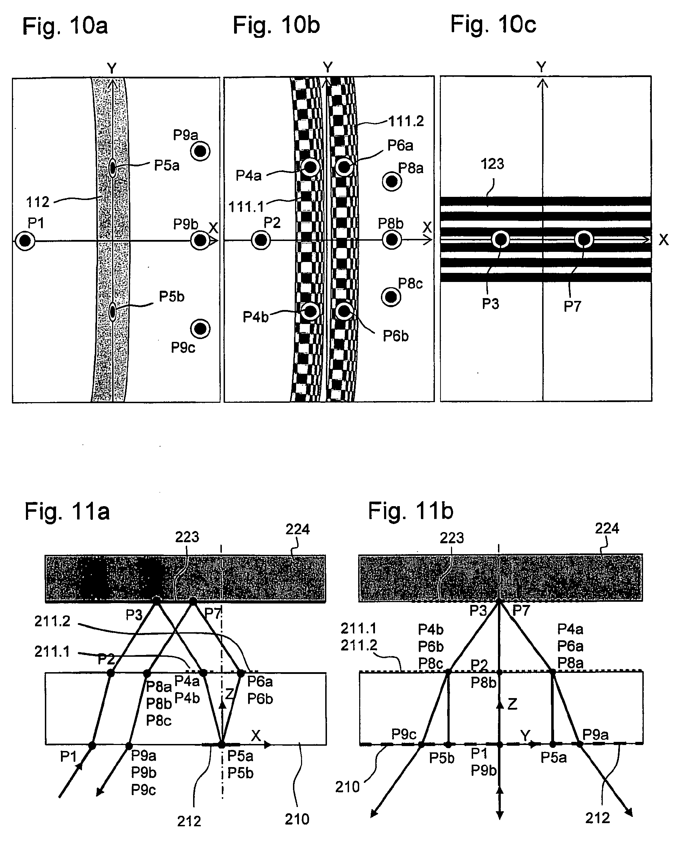

Figur 10a zeigt die Unterseite der Teilscheibe 110 mit dem ringförmigen Spiegel 112. In Figur 10b sind die ringförmigen, kombinierten Radial-Zirkularteilungen 111.1 und 111.2 dargestellt. In Figur 10c erkennt man das ausgedehnte, lineare Abtastgitter 123 der Abtastplatte 124. Ebenfalls dargestellt sind in diesen Figuren wiederum die Orte, an denen die Teilstrahlenbündel auf die verschiedenen Elemente im Abtaststrahlengang auftreffen.

Durch die Neigung des kollimierten Laserstrahlenbündels in der XZ-Ebene wird in dieser Ausführungsform der erfindungsgemäßen Winkelmesseinrichtung eine Trennung der auf die Teilscheibe 110 treffenden Teilstrahlenbündel erreicht, so dass an den Orten P2, P8a, P8b und P8c eine Transmission der Teilstrahlenbündel erfolgt, und an den Orten P4a, P4b, P6a und P6b eine Beugung an den Gittern 111.1 und 111.2. Bei der Berechnung der Gitterstruktur der Gitter 111.1 und 111.2 nach den oben angegebenen Formeln muss die laterale Komponente des k-Vektors aufgrund dieser Strahlneigung berücksichtigt werden. Sie führt zu einem entsprechenden angepassten azimutalen Gittervektor $k_{A1a}$ und radialen Gittervektor $k_{A1r}$. Die Strahlneigung in der XZ-Ebene wird im weiteren Strahlenverlauf nach dem zweiten kombinierten Radial-Zirkulargitter 110.2 beibehalten. Dazu werden der azimutale Gittervektor $k_{A2a}$ und der radiale Gittervektoren $k_{A1r}$ entsprechend gewählt.

Diese Abtastoptik erlaubt die Messung des Winkels $\Theta$ bei jeder X-Position des Lineartisches 31. Die Lage der Abtasteinheit 120 muss nur näherungsweise unterhalb des vorbestimmten Kreuzungspunktes der Abtastplatte 124 und der Teilscheibe 110 gehalten werden. Kleine Verschiebungen oder Kippungen der Abtasteinheit 120 beeinflussen die Winkelbestimmung nicht. Bei genauerer Betrachtung ist für diese Eigenschaft maßgeblich, dass die Retroreflexion und die Wellenfrontkorrektur nicht in der Abtasteinheit stattfinden, sondern durch die Radial-Zirkulargitter auf der Teilscheibe bewirkt werden. Für den ausgegebenen Winkelwert ist damit nur die Relativlage von Abtastplatte 124 und Teilscheibe 110 relevant. Obwohl eine überlagerte Linear- und Drehbewegung der Teilscheibe 110 vorliegt, kann eine direkte Positionsmessung relativ zur ortsfesten Abtastplatte 124 erfolgen. Der in Figur 7 schematisiert angedeutete Messzirkel 40 ist entsprechend klein. Ein kleiner Messzirkel 40 ermöglicht in vorteilhafter Weise eine besonders driftarme Messung des Objekts 33 zum Sensor 32.

## Dritte Ausführungsform

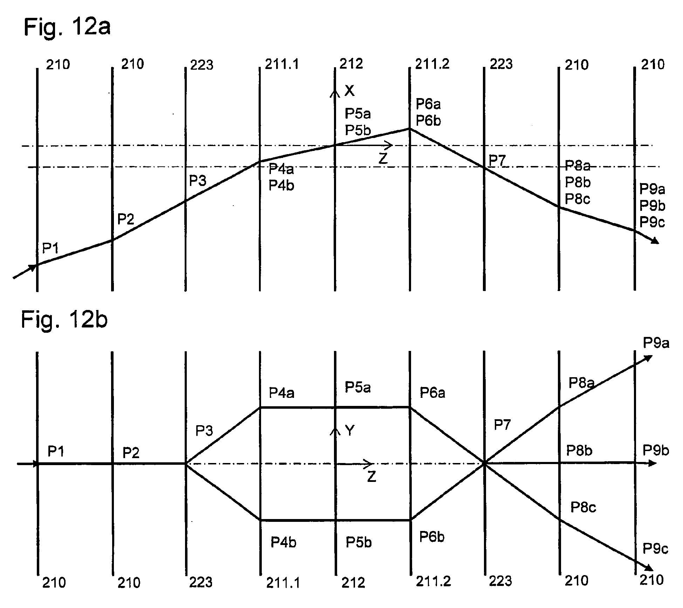

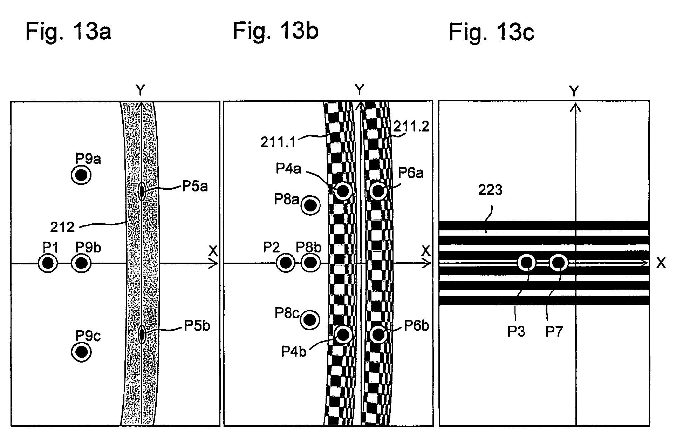

In den Figuren 11a, 11b, 12a, 12b sowie 13a, 13b, 13c ist eine dritte Ausführungsform der erfindungsgemäßen optischen Winkelmesseinrichtung dargestellt. Diese Variante kann ebenfalls wieder in den oben erwähnten Polarkoordinaten-Kinematiken eingesetzt werden.

Im Unterschied zur zweiten Ausführungsform wird die Strahlneigung der Teilstrahlenbündel in der XZ-Ebene durch die besondere Ausgestaltung des zweiten kombinierten Radial-Zirkulargitters 210.2 umgedreht, so dass die beiden Teilstrahlenbündel anschließend etwas in die -X-Richtung gekippt sind. Dadurch können die Lichtquelle und die Detektorelemente durch den engeren Abstand kompakt in der Abtasteinheit untergebracht werden. Die besondere Ausgestaltung des zweiten kombinierten Radial-Zirkulargitters 210.2 erfolgt durch einen entsprechenden Gittervektor in X-Richtung, der in eine azimutale und eine radiale Komponente aufgespalten wird und jeweils dem azimutalen Gittervektor $k_{A2a}$ bzw. dem radialen Gittervektor $k_{A2r}$ hinzuaddiert wird.

## Vierte Ausführungsform

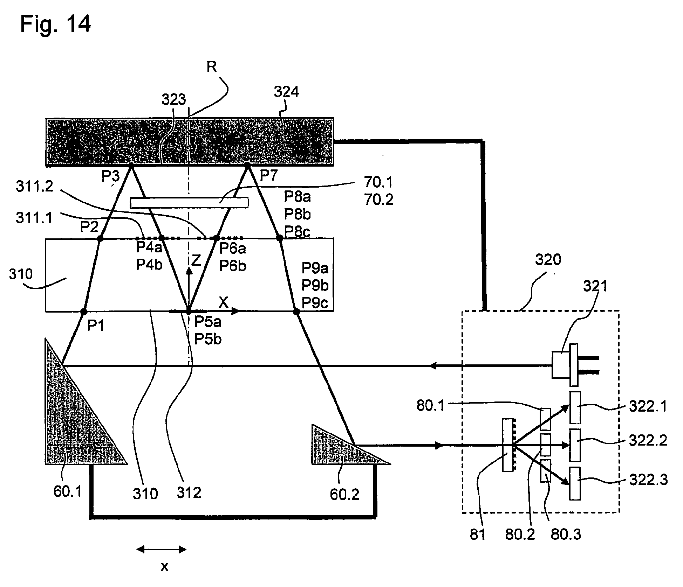

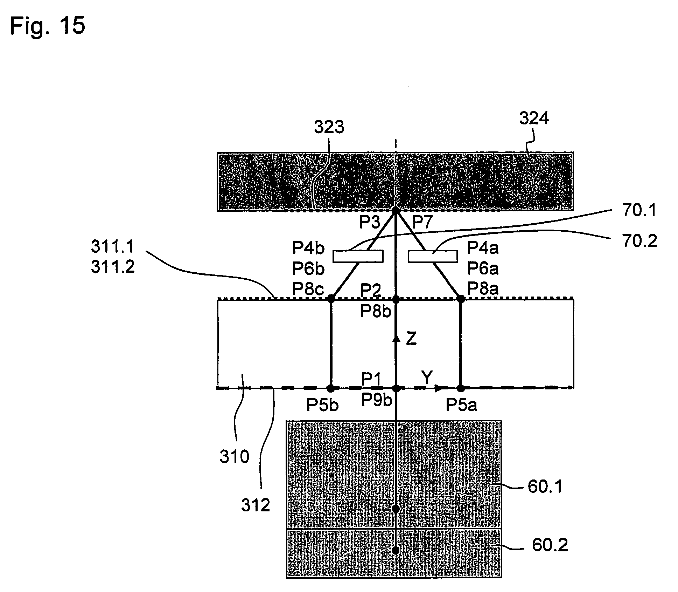

Eine vierte Ausführungsform der erfindungsgemäßen optischen Winkelmesseinrichtung bzw. der Abtaststrahlengang ist in den Figuren 14 und 15 schematisiert dargestellt; wiederum eignet sich diese Variante für den Einsatz in einer Maschine mit einer Polarkoordinaten-Kinematik.

Die Besonderheit dieser Ausführungsform besteht in der ortsfest angeordneten Abtasteinheit 320, die die linear polarisierte und kollimierte Lichtquelle 321 sowie die Detektorelemente 322.1, 322.2 und 322.2 enthält. Das linear polarisierte Strahlenbündel der Lichtquelle wird entgegengesetzt zur X-Richtung zu einem ersten Umlenkspiegel 60.1 einer Ablenkeinheit gesendet, wo es durch Reflexion zur Teilscheibe 310 gelenkt wird. Im weiteren Strahlenverlauf wird das Strahlenbündel an einem reflektierenden Abtastgitter 323 in zwei Teilstrahlenbündel aufgespalten, die anschließend $\lambda/8$-Verzögerungsplatten 70.1 bzw. 70.2 durchlaufen. Nach der Beugung am ersten Radial-Zirkulargitter 311.1, der Reflexion am Spiegel 312 und der Beugung am zweiten Radial-Zirkulargitter 311.2 wird die $\lambda/8$-Verzögerungsplatte 70.1 bzw. 70.2 jeweils erneut durchlaufen. Dadurch wird die lineare Polarisation der Teilstrahlenbündel in eine rechts- bzw. linkszirkulare Polarisation umgewandelt. Die zweite Beugung am reflektierenden Abtastgitter 323 überlagert die zueinander orthogonal polarisierten Teilstrahlenbündel zu einem resultierenden Strahlenbündel, das in resultierender 0. Beugungsordnung austritt. Es wird durch den zweiten Umlenkspiegel 60.2 der Ablenkeinheit parallel zur X-Achse gelenkt und propagiert in Richtung der Abtasteinheit 320. In dieser befindet sich ein Aufspaltgitter 81, welches das resultierende Strahlenbündel in drei resultierende Teilstrahlenbündel aufspaltet. Sie durchtreten jeweils einen Polarisator 80.1, 80.2 bzw. 80.3. Diese sind dergestalt unterschiedlich orientiert, das die nachfolgende Detektion durch die Detektorelemente 322.1, 322.2 bzw. 322.3 drei zueinander um 120° phasenversetzte Abtastsignale liefert.

Sowohl die beiden Umlenkspiegel 60.1 und 60.2, die hier als Ablenkeinheit für die jeweils darauf einfallenden Strahlenbündel wirken, als auch die $\lambda/8$-Verzögerungsplatten 70.1 und 70.2 sind wie bereits erwähnt auf dem Lineartisch angeordnet und über den Lineartisch in der angegebenen X-Richtung verschiebbar. Es ist damit ein gleichbleibender Strahlenverlauf unabhängig von der X-Position des Lineartisches gewährleistet. Da die Abtasteinheit 320 erhebliche Verlustleistungen erzeugen kann, minimiert die räumlich entfernte Anordnung die thermische Belastung der kritischen Bauteile, insbesondere der Teilscheibe 310 und der Abtastplatte 324. Die Messgenauigkeit lässt sich dadurch nochmals steigern und die Drift der ausgegebenen Positionswerte nimmt erheblich ab.

Im vorliegenden Ausführungsbeispiel ist demzufolge die Teilscheibe 310 beweglich relativ gegenüber der ortsfesten Abtasteinheit 320 und der ortsfesten Abtastplatte 324 bzw. dem darauf angeordneten Abtastgitter angeordnet. Das Abtastgitter und die Abtasteinheit 320 sind hierbei entlang einer Achse gegenüber der Teilscheibe 310 beweglich, die durch das Zentrum der Teilscheibe 310 verläuft. Hierzu ist am Rundtisch der Maschine, der um die Rotationsachse R drehbar ist, kreisumfangsmäßig die Teilscheibe 310 angeordnet, am ortsfesten Maschinenbett hingegen die Abtasteinheit 320 und das Abtastgitter bzw. die Abtastplatte 324.

Natürlich können in weiteren Abwandlungen dieser Ausführungsform der erfindungsgemäßen optischen Winkelmesseinrichtung auch andere polarisationsoptische Bauelemente in den Strahlengang der Teilstrahlenbündel eingefügt werden, um eine orthogonale lineare oder zirkulare Polarisation zu erzielen. Dementsprechend gibt es für den Fachmann auch andere Anordnungen polarisationsoptischer Bauelemente in der Abtasteinheit 320, um das resultierende Strahlenbündel in verschiebungsabhängige, phasenverschobene Abtastsignale umzuwandeln.

## Fünfte Ausführungsform

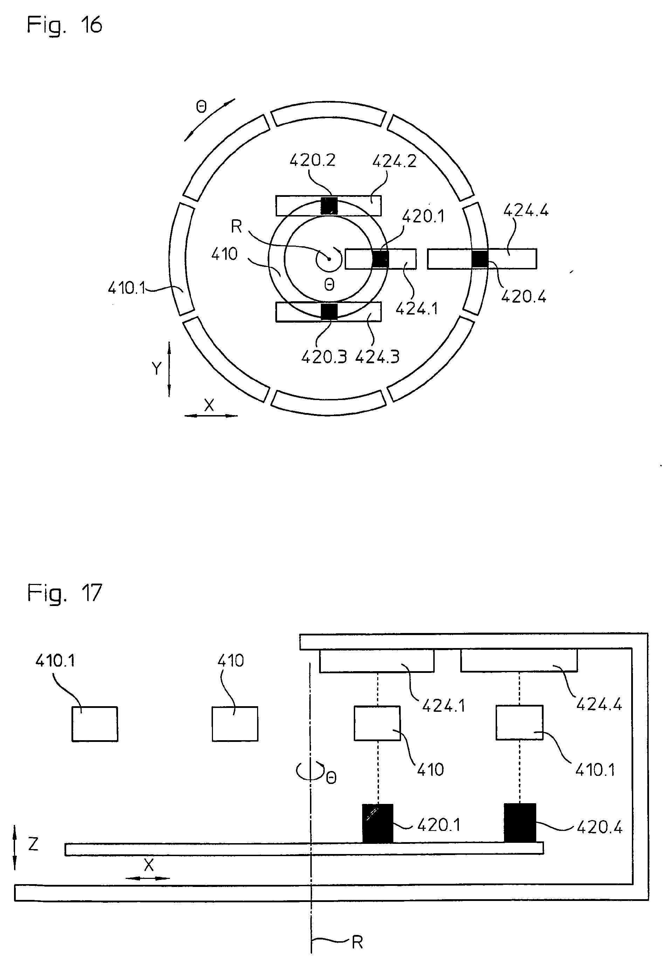

Eine fünfte Ausführungsform der der erfindungsgemäßen optischen Winkelmesseinrichtung ist in den Figuren 16 und 17 stark schematisiert dargestellt; auch diese Ausführungsform eignet sich für den Einsatz in einer Maschine mit einer Polarkoordinatenkinematik.

Die entsprechende Maschine umfasst wiederum einen um die Rotationsachse R drehbaren - nicht dargestellten - Rundtisch, der auf einem - ebenfalls nicht dargestellten - Lineartisch entlang der X-Richtung verschiebbar angeordnet ist. In einem inneren Bereich des Rundtisches ist eine innere erste Teilscheibe 410 angeordnet, die mithilfe von drei Abtastplatten 424.1, 424.2 und 424.3 und diesen zugeordneten drei Abtasteinheiten 420.1, 420.2 und 420.3 abgetastet wird. Die Abtastplatten 424.1, 424.2, 424.3 und die Abtasteinheiten 420.1, 420.2, 420.3 sind hierbei an verschiedenen Azimutalpositionen relativ zur Teilscheibe 410 angeordnet. Die Abtastplatten 424.1, 424.2, 424.3 sind mit der stationären Maschinenbasis verbunden, die Abtasteinheiten 420.1, 420.2, 420.3 hingegen sind auf dem in X-Richtung verschiebbaren Lineartisch angeordnet. Außerdem ist am Außenumfang des Rundtisches noch eine in mehrere Teilscheibensegmente unterteilte, äußere zweite Teilscheibe 410.1 angebracht, deren Bewegung über die zusätzliche Abtastplatte 424.4 und die zusätzliche Abtasteinheit 420.4 erfasst wird; die Abtastplatte 424.4 ist wiederum mit der stationären Maschinenbasis verbunden, die Abtasteinheit 420.4 auf dem Lineartisch angeordnet.

Alle vier Abtasteinheiten 420.1 - 420.4 liefern Positionssignale, die vom Drehwinkel $\Theta$ des Rundtisches abhängen. Bei genauerer Betrachtung werden durch eine Abtasteinheit 420.1 - 420.4 aber jeweils auch zur azimutalen Richtung parallele, lineare Verschiebungen der Teilscheibe 410 bzw. 410.1 relativ zu den Abtastplatten 424.1, 424.2, 424.3 und 424.4 gemessen. Das heißt, dass über diese Konfiguration alle Freiheitsgrade des bewegten Objekts in der XY-Ebene erfasst werden können.

Wenn die positiven Messrichtungen der Abtasteinheiten 420.2 und 420.3 in die +X-Richtung zeigen und diejenigen der Abtasteinheiten 420.1 und 420.4 in die +Y-Richtung, dann ergeben sich für die zugehörigen Abtastsignale $\xi_2$ und $\xi_3$ bzw. $\xi_1$ und $\xi_4$ folgende Beziehungen:

$$\Delta\xi_1 = \Delta y + R_1 \cdot \Delta\Theta \qquad \text{(Gl. 13.1)}$$

$$\Delta\xi_2 = \Delta x - R_1 \cdot \Delta\Theta \qquad \text{(Gl. 13.2)}$$

$$\Delta\xi_3 = \Delta x + R_1 \cdot \Delta\Theta \qquad \text{(Gl. 13.3)}$$

$$\Delta\xi_4 = \Delta y + R_2 \cdot \Delta\Theta \qquad \text{(Gl. 13.4)}$$

mit

$R_1$     Teilungsradius der inneren Teilscheibe 410
$R_2$     Teilungsradius der äußeren Teilscheibe 410.1

Daraus lassen sich der Winkel $\Delta\Theta$ und die Verschiebungen $\Delta x$ und $\Delta y$ des Rundtisch-Zentrums bestimmen:

$$\Delta\Theta = \frac{\Delta\xi_4 - \Delta\xi_1}{R_2 - R_1} \qquad \text{(Gl. 14.1)}$$

$$\Delta x = \frac{\Delta\xi_2 + \Delta\xi_3}{2} \qquad \text{(Gl. 14.2)}$$

$$\Delta y = \frac{\Delta\xi_1 \cdot R_2 + \Delta\xi_4 \cdot R_1}{R_2 - R_1} \qquad \text{(Gl. 14.3)}$$

Eine Transformation dieser Tischverschiebungen des Rundtischzentrums auf diejenigen am Ort eines Sensors der Maschine ist natürlich leicht möglich. Es lassen sich über diese Anordnung damit grundsätzlich alle lateralen Freiheitsgrade $\Delta x$, $\Delta y$ und $\Delta\Theta$ eines oder mehrerer Objekte auf dem Rundtisch relativ zum Sensor bestimmen. Wenn die Abtasteinheiten 420.1, 420.2, 420.3 und 420.4 darüber hinaus - in nicht dargestellter Weise - so ausgestaltet sind, dass jeweils auch eine Verschiebung senkrecht zur XY-Ebene, d.h. in Z-Richtung, am Kreuzungspunkt der zugehörigen Abtastplatte 424.1, 424.2, 424.3 bzw. 424.4 mit der Teilscheibe 410 bzw. 410.1 gemessen werden kann, so sind alle 6 Freiheitsgrade des jeweiligen Objekts relativ zu einem ortsfesten Sensor messbar.

Wie oben erwähnt, erfolgt diese Messung nicht sequentiell von der ortsfesten Maschinenbasis zum Lineartisch und dann vom Lineartisch zum Rundtisch; die dargestellte Anordnung der erfindungsgemäßen Winkelmesseinrichtung gestattet vielmehr eine direkte Messung bzw. Positionsbestimmung. Geeignete Messeinrichtungen für die Z-Verschiebung sind vorzugsweise optische Sensoren wie z.B. Planspiegelinterferometer, Fokussensoren; alternativ hierzu wären auch kapazitive Messeinrichtungen zur Abstandsmessung in Z-Richtung geeignet.

In diesem Ausführungsbeispiel sind vier Abtasteinheiten 420.1, 420.2, 420.3 und 420.4 zur Messung von drei lateralen Freiheitsgraden vorgesehen. Es gibt also eine redundante Abtasteinheit. Dadurch ist es möglich, kleine Unterbrechungen der äußeren Teilscheibe 410.1 zuzulassen und diese aus mehreren Teilscheibensegmenten aufzubauen. Eine Segmentierung der äußeren Teilscheibe 410.1 ist deshalb vorteilhaft, weil die Segmente aufgrund ihrer begrenzten Größe deutlich leichter und kostengünstiger herstellbar sind als etwa eine einstückige, große Teilscheibe. Die Segmentgrenzen und damit die Signalunterbrechungen sollen vorzugsweise an den Orten erfolgen, an denen der Sensor 432 zwischen zwei Objekten auf dem Rundtisch steht. Dort wird der Inkrementalzähler der Abtasteinheit 420.4 jeweils ungültig. Wird nun das nächste Segment der Teilscheibe 410.1 in den Bereich der äußeren Abtasteinheit 420.4 gedreht, so kann mithilfe der lateralen Positionsbestimmung der anderen drei Abtasteinheiten 420.1, 420.2 und 420.3 der Inkrementalzählerwert der äußeren Abtasteinheit 420.4 ausreichend genau geschätzt werden und entsprechend auch gesetzt werden. Zur weiteren Genauigkeitssteigerungen können noch kleinere Phasenoffsets zwischen den Segmenten der äußeren Teilscheibe 410.1 erfasst und korrigiert werden.

**Sechste Ausführungsform**

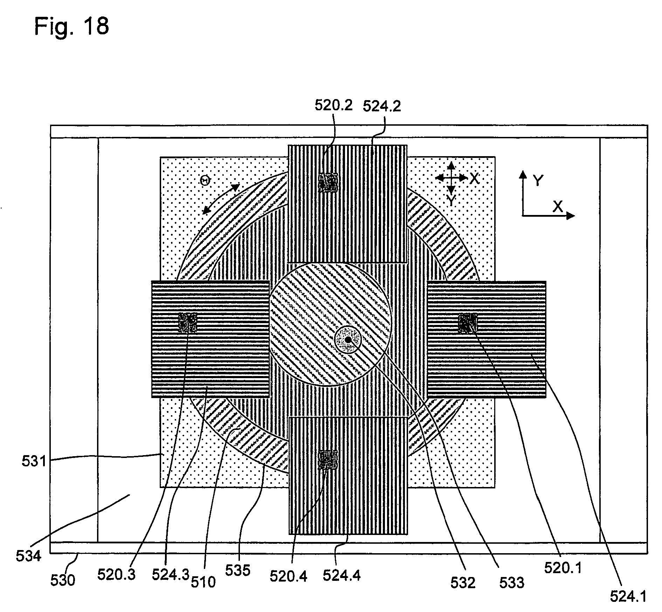

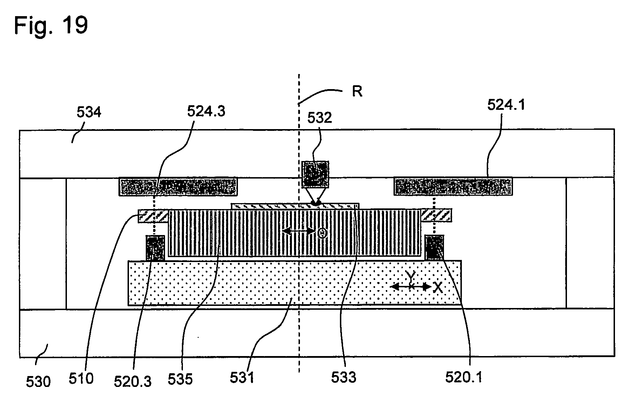

In den Figuren 18 und 19 ist eine sechste Ausführungsform der erfindungsgemäßen optischen Winkelmesseinrichtung gezeigt; vorgesehen ist deren Einsatz wiederum in einer Maschine mit Polarkoordinaten-Kinematik.

Eine Teilscheibe 510 wird hier durch vier Abtasteinheiten 520.1, 520.2, 520.3 und 520.4 und zugehörigen ortsfesten Abtastplatten 524.1, 524.2, 524.3 und 524.4 abgetastet. Die Abtastplatten 524.1, 524.2, 524.3 und 524.4 sind wieder als Lineargitter ausgebildet, nunmehr jedoch auch mit einer so großen Ausdehnung in azimutaler Richtung, dass auch eine nennenswerte Verschiebung des Abtastortes in eben dieser Richtung möglich ist. Dadurch ist es möglich, auch einen Rundtisch 531 einzusetzen, der sowohl in X- als auch in Y-Richtung verschiebbar ist. Auf dem Tisch 531 sind die Abtasteinheiten 520.1, 520.2, 520.3 und 520.4 befestigt.

Diese Ausführungsform der erfindungsgemäßen optischen Winkelmesseinrichtung erlaubt wiederum eine Messung in allen lateralen Freiheitsgraden X, Y und $\Theta$, mit der Besonderheit, dass auch sehr große Verschiebungen in allen diesen Freiheitsgraden möglich sind. Wenn zudem die Abtasteinheiten 520.1, 520.2, 520.3 und 520.4 jeweils wieder eine Messeinrichtung für die Z-Verschiebung enthalten, so sind alle sechs Freiheitsgrade des Rundtisches 531 relativ zu den ortsfesten Abtastplatten 524.1, 524.2, 524.3 und 524.4 bestimmbar.

**Weitere Ausführungsformen**

Natürlich könnten in weiteren Modifikationen der erfindungsgemäßen optischen Winkelmesseinrichtung auch Kreuzgitter, d.h. zweidimensionale Teilungen, als Abtastgitter verwendet werden. Damit ließen sich besonders große lineare oder auch flächige Verschiebungen des Rundtisches erfassen. Auch ist es möglich, nur ein entsprechend großes Kreuzgitter als gemeinsames Abtastgitter für alle Abtasteinheiten vorzusehen. Darüber hinaus kann die azimutale Lage der Abtasteinheiten auf der Teilscheibe beliebig und unabhängig von der oder den Bewegungsrichtungen des Linear- bzw. XY-Tisches in einer Maschine mit Polarkoordinaten-Kinematik gewählt werden. Die Orientierung des Abtastgitters muss dabei mit der azimutalen Richtung am Abtastort übereinstimmen.

Weiterhin ist es möglich, die beiden kombinierten Radial-Zirkulargitter auf der Unterseite der Teilscheibe als Reflexionsgitter und den Spiegel auf dessen Oberseite auszubilden. Dadurch wird der Strahlenverlauf innerhalb der Teilscheibe W-förmig usw..

**Patentansprüche**

1. Optische Winkelmesseinrichtung zur Erfassung der Relativbewegung zwischen mindestens einem Abtastgitter (23.1, 23.2; 123; 223; 323) und einer Teilscheibe (10; 110; 210; 310; 410; 510) mit mindestens einer Messteilung, wobei

    - das Abtastgitter (23.1, 23.2; 123; 223; 323) als lineares Abtastgitter ausgebildet ist und
    - die Teilscheibe (10; 110; 210; 310; 410; 510) als Messteilung ein erstes und ein zweites kombiniertes Radial-Zirkulargitter (11.1, 11.2; 111.1, 111.2; 211.1, 211.2; 311.1, 311.2) umfasst und einen Spiegel (12; 112; 212; 312) aufweist, so dass

        - ein einfallendes Strahlenbündel am Abtastgitter (23.1, 23.2; 123; 223; 323) zunächst eine Aufspaltung in zwei Teilstrahlenbündel erfährt,
        - die Teilstrahlenbündel in Richtung des ersten kombinierten Radial-Zirkulargitters (11.1; 111.1; 211.1; 311.1) propagieren und dort eine Beugung erfahren,
        - die gebeugten Teilstrahlenbündel in Richtung des Spiegels (12; 112; 212; 312) propagieren und dort eine Reflexion in Richtung des zweiten kombinierten Radial-Zirkulargitters (11.2; 111.2; 211.2; 311.2) erfahren,
        - die Teilstrahlenbündel in Richtung des zweiten kombinierten Radial-Zirkulargitters (11.2; 111.2; 211.2; 311.2) propagieren und dort eine Beugung erfahren,
        - die gebeugten Teilstrahlenbündel in Richtung des Abtastgitters (23.1, 23.2; 123; 223; 323) propagieren, wo eine Überlagerung der Teilstrahlenbündel resultiert.

2. Optische Winkelmesseinrichtung nach Anspruch 1, wobei die kombinierten ersten und zweiten Radial-Zirkulargitter (11.1, 11.2; 111.1, 111.2; 211.1, 211.2; 311.1, 311.2) zumindest eine azimutale optische Ablenkwirkung mit der optischen Wirkung einer radialen, ringförmig gebogenen Zylinderlinse vereinen.

3. Optische Winkelmesseinrichtung nach Anspruch 1 oder 2, wobei das erste kombinierte Radial-Zirkulargitter (11.1, 11.2; 111.1, 111.2; 211.1, 211.2; 311.1, 311.2) derart ausgebildet ist, dass darüber neben einer longitudinalen und einer transversalen Ablenkwirkung auf die Teilstrahlenbündel ferner eine Fokussierung der Teilstrahlenbündel auf den Spiegel (12; 112; 212; 312) resultiert.

4. Optische Winkelmesseinrichtung nach Anspruch 1, wobei das zweite kombinierte Radial-Zirkulargitter (11.1, 11.2; 111.1, 111.2; 211.1, 211.2; 311.1, 311.2) derart ausgebildet ist, dass darüber neben einer longitudinalen und einer transversalen Ablenkwirkung auf die Teilstrahlenbündel ferner eine Re-Kollimation der in Richtung des Abtastgitters (23.1, 23.2; 123; 223; 323) propagierenden Teilstrahlenbündel resultiert.

5. Optische Winkelmesseinrichtung nach mindestens einem der vorhergehenden Ansprüche, wobei die kombinierten ersten und zweiten Radial-Zirkulargitter (11.1, 11.2; 111.1, 111.2; 211.1, 211.2; 311.1, 311.2) ringförmig über den Umfang der Teilscheibe (10; 110; 210; 310; 410; 510) angeordnet sind und über den Ringumfang jeweils eine konstante azimutale Gitterperiode besitzen und in radialer Richtung eine variierende radiale Gitterperiode aufweisen.

6. Optische Winkelmesseinrichtung nach Anspruch 1, wobei der Spiegel (12; 112; 212; 312) ringförmig über den Umfang der Teilscheibe (10; 110; 210; 310; 410; 510) angeordnet ist.

7. Optische Winkelmesseinrichtung nach Anspruch 5 und 6, wobei die Teilscheibe (10; 110; 210; 310; 410; 510) aus transparentem Material besteht und auf einer ersten Seite die kombinierten ersten und zweiten Radial-Zirkulargitter (11.1, 11.2; 111.1, 111.2; 211.1, 211.2; 311.1, 311.2) angeordnet sind und auf der entgegengesetzten zweiten Seite der Spiegel (12; 112; 212; 312) angeordnet ist, dessen Reflexionsfläche in Richtung der ersten Seite orientiert ist.

8. Optische Winkelmesseinrichtung nach mindestens einem der vorhergehenden Ansprüche, wobei das Abtastgitter (123; 223; 323) als reflektierendes Abtastgitter ausgebildet ist.

9. Optische Winkelmesseinrichtung nach mindestens einem der Ansprüche 1 - 7, wobei eine Lichtquelle (21; 321) sowie mehrere optoelektronische Detektorelemente (22.1 - 22.3; 322.1 - 322.3) in einer Abtasteinheit (20; 120; 320; 420.1 - 420.4; 520.1 - 520.4) angeordnet sind und das von der Lichtquelle (21; 321) emittierte Strahlenbündel dem Abtastgitter (23.1, 23.2; 123; 223; 323) zuführbar ist und die überlagerten Teilstrahlenbündel den optoelektronischen Detektorelementen (22.1 - 22.3; 322.1 - 322.3) zuführbar sind.

10. Optische Winkelmesseinrichtung nach Anspruch 9, wobei in der Abtasteinheit (20) ferner das Abtastgitter (23.1, 23.2) angeordnet ist und die Teilscheibe (10) gegenüber der Abtasteinheit (20) beweglich angeordnet ist.

11. Optische Winkelmesseinrichtung nach Anspruch 9, wobei gegenüber dem Abtastgitter (123; 223) mindestens eine Abtasteinheit (120; 420.1 - 420.4; 520.1 - 520.4) verschiebbar und die Teilscheibe (110; 210; 410; 510) drehbar angeordnet ist.

12. Optische Winkelmesseinrichtung nach Anspruch 9, wobei mindestens eine Abtasteinheit (320) zusammen mit dem Abtastgitter (323) gegenüber der Teilscheibe (310) entlang einer Achse (X) relativ beweglich angeordnet ist, die durch das Zentrum der Teilscheibe (310) verläuft.

13. Optische Winkelmesseinrichtung nach Anspruch 9 mit mehreren Abtasteinheiten (420.1 - 420.3) und einer Mehrzahl den Abtasteinheiten (420.1 - 420.3) zugeordneten Abtastgittern (424.1 - 424.3), wobei die Abtasteinheiten (420.1 - 420.3) und Abtastgitter (424.1 - 424.3) an verschiedenen Azimutalpositionen relativ zur Teilscheibe (410) angeordnet sind.

14. Optische Winkelmesseinrichtung nach Anspruch 9, wobei die Teilscheibe (410.1) aus mehreren Teilscheibensegmenten besteht.

15. Optische Winkelmesseinrichtung nach Anspruch 9, wobei

   - die von der Abtasteinheit (320) kommenden Strahlenbündel über eine Ablenkeinheit in Richtung der Teilscheibe (310) lenkbar sind und
   - die von der Teilscheibe (310) kommenden Strahlenbündel über die Ablenkeinheit in Richtung der Abtasteinheit (320) lenkbar sind.

**Claims**

1. Optical angle measuring device for capturing the relative movement between at least one scanning grating (23.1, 23.2; 123; 223; 323) and a graduated disc (10; 110; 210; 310; 410; 510) with at least one measurement graduation, wherein

   - the scanning grating (23.1, 23.2; 123; 223; 323) is configured as a linear scanning grating and
   - the graduated disc (10; 110; 210; 310; 410; 510) comprises as the measurement graduations a first and a second combined radial-circular grating (11.1, 11.2; 111.1, 111.2; 211.1, 211.2; 311.1, 311.2) and has a mirror (12; 112; 212; 312) such that
   - an incident beam is firstly split into two partial beams at the scanning grating (23.1, 23.2; 123; 223; 323),
   - the partial beams propagate in the direction of the first combined radial-circular grating (11.1; 111.1; 211.1; 311.1) and are diffracted here,
   - the diffracted partial beams propagate in the direction of the mirror (12; 112; 212; 312) and are reflected here in the direction of the second combined radial-circular grating (11.2; 111.2; 211.2; 311.2),
   - the partial beams propagate in the direction of the second combined radial-circular grating (11.2; 111.2; 211.2; 311.2) and are diffracted here,
   - the diffracted partial beams propagate in the direction of the scanning grating (23.1, 23.2; 123; 223; 323), where the partial beams are superposed as a result.

2. Optical angle measuring device according to Claim 1, wherein the combined first and second radial-circular gratings (11.1, 11.2; 111.1, 111.2; 211.1, 211.2; 311.1, 311.2) unite at least one azimuth optical deflection effect with the optical effect of a radial cylindrical lens that is curved in the shape of a ring.

3. Optical angle measuring device according to Claim 1 or 2, wherein the first combined radial--circular grating (11.1, 11.2; 111.1, 111.2; 211.1, 211.2; 311.1, 311.2) is configured such that, beside a longitudinal and a transversal deflection effect on the partial beams, it furthermore results in focussing of the partial beams onto the mirror (12; 112; 212; 312).

4. Optical angle measuring device according to Claim 1, wherein the second combined radial-circular grating (11.1, 11.2; 111.1, 111.2; 211.1, 211.2; 311.1, 311.2) is configured such that, beside a longitudinal and a transversal deflection effect on the partial beams, it furthermore results in a re-collimation of the partial beams propagating in the direction of the scanning grating (23.1, 23.2; 123; 223; 323).

5. Optical angle measuring device according to at least one of the preceding claims, wherein the combined first and second radial-circular gratings (11.1, 11.2; 111.1, 111.2; 211.1, 211.2; 311.1, 311.2) are arranged in the shape of a ring over the circumference of the graduated disc (10; 110; 210; 310; 410; 510) and have in each case a constant azimuth grating period over the ring circumference and have a varying radial grating period in the radial direction.

6. Optical angle measuring device according to Claim 1, wherein the mirror (12; 112; 212; 312) is arranged in the shape of a ring over the circumference of the graduated disc (10; 110; 210; 310; 410; 510).

7. Optical angle measuring device according to Claims 5 and 6, wherein the graduated disc (10; 110; 210; 310; 410; 510) is comprised of transparent material and the combined first and second radial-circular gratings (11.1, 11.2; 111.1, 111.2; 211.1, 211.2; 311.1, 311.2) are arranged on a first side and the mirror (12; 112; 212; 312), whose reflection surface is oriented in the direction of the first side, is arranged on the opposite, second side.

8. Optical angle measuring device according to at least one of the preceding claims, wherein the scanning grating (123; 223; 323) is configured as a reflective scanning grating.

9. Optical angle measuring device according to at least one of Claims 1-7, wherein a light source (21; 321) and a plurality of optoelectronic detector elements (22.1-22.3; 322.1-322.3) are arranged in a scanning unit (20; 120; 320; 420.1-420.4; 520.1-520.4) and the beam emitted by the light source (21; 321) is feedable to the scanning grating (23.1, 23.2; 123; 223; 323) and the superposed partial beams are feedable to the optoelectronic detector elements (22.1-22.3; 322.1-322.3).

**10.** Optical angle measuring device according to Claim 9, wherein furthermore the scanning grating (23.1, 23.2) is arranged in the scanning unit (20) and the graduated disc (10) is arranged such that it moves with respect to the scanning unit (20).

**11.** Optical angle measuring device according to Claim 9, wherein at least one scanning unit (120, 420.1-420.4; 520.1-520.4) is arranged to be displaceable and the graduated disc (110; 210; 410; 510) is arranged to be rotatable with respect to the scanning grating (123; 223).

**12.** Optical angle measuring device according to Claim 9, wherein at least one scanning unit (320) is arranged together with the scanning grating (323) to be movable relative to the graduated disc (310) along an axis (X) which extends through the centre of the graduated disc (310).

**13.** Optical angle measuring device according to Claim 9, having a plurality of scanning units (420.1-420.3) and a plurality of scanning gratings (424.1-424.3) associated with the scanning units (420.1-420.3), wherein the scanning units (420.1-420.3) and the scanning gratings (424.1-424.3) are arranged at different azimuth positions relative to the graduated disc (410).

**14.** Optical angle measuring device according to Claim 9, wherein the graduated disc (410.1) consists of a plurality of graduated disc segments.

**15.** Optical angle measuring device according to Claim 9, wherein

- the beams coming from the scanning unit (320) are directable via a deflection unit in the direction of the graduated disc (310) and
- the beams coming from the graduated disc (310) are directable via the deflection unit in the direction of the scanning unit (320).

**Revendications**

**1.** Dispositif de mesure d'angle optique destiné à détecter le mouvement relatif entre au moins un réseau d'exploration (23.1, 23.2 ; 123 ; 223 ; 323) et un disque gradué (10 ; 110 ; 210 ; 310 ; 410 ; 510) doté d'au moins une graduation de mesure,

- le réseau d'exploration (23.1, 23.2 ; 123 ; 223 ; 323) étant réalisé sous la forme d'un réseau d'exploration linéaire et
- le disque gradué (10 ; 110 ; 210 ; 310 ; 410 ; 510) comprenant comme graduation de mesure une première et une deuxième grille radiale-circulaire combinée (11.1, 11.2 ; 111.1, 111.2 ; 211.1, 211.2 ; 311.1, 311.2) et possède un miroir (12 ; 112 ; 212 ; 312), de sorte que
- un faisceau de rayons incident sur le réseau d'exploration (23.1, 23.2 ; 123 ; 223 ; 323) subit tout d'abord une division en deux faisceaux de rayons partiels,
- les faisceaux de rayons partiels se propagent en direction de la première grille radiale-circulaire combinée (11.1 ; 111.1 ; 211.1 ; 311.1) et y subissent une diffraction,
- les faisceaux de rayons partiels diffractés se propagent en direction du miroir (12 ; 112 ; 212 ; 312) et y subissent une réflexion en direction de la deuxième grille radiale-circulaire combinée (11.2 ; 111.2 ; 211.2 ; 311.2),
- les faisceaux de rayons partiels se propagent en direction de la deuxième grille radiale-circulaire combinée (11.2 ; 111.2 ; 211.2 ; 311.2) et y subissent une diffraction,
- les faisceaux de rayons partiels diffractés se propagent en direction du réseau d'exploration (23.1, 23.2 ; 123 ; 223 ; 323) où il se produit une superposition des faisceaux de rayons partiels.

**2.** Dispositif de mesure d'angle optique selon la revendication 1, avec lequel les première et deuxième grilles radiales-circulaires combinées (11.1, 11.2 ; 111.1, 111.2 ; 211.1, 211.2 ; 311.1, 311.2) combinent au moins un effet de déviation optique azimutale avec l'effet optique d'une lentille cylindrique radiale courbée en forme d'anneau.

**3.** Dispositif de mesure d'angle optique selon la revendication 1 ou 2, avec lequel la première grille radiale-circulaire combinée (11.1, 11.2; 111.1, 111.2; 211.1, 211.2; 311.1, 311.2) est configurée de telle sorte qu'il résulte sur celle-ci, outre un effet de déviation longitudinal et un transversal sur les faisceaux de rayons partiels, également une concentration des faisceaux de rayons partiels sur le miroir (12 ; 112 ; 212 ; 312).

4. Dispositif de mesure d'angle optique selon la revendication 1, avec lequel la deuxième grille radiale-circulaire combinée (11.1, 11.2; 111.1, 111.2; 211.1, 211.2; 311.1, 311.2)est configurée de telle sorte qu'il résulte sur celle-ci, outre un effet de déviation longitudinal et un transversal sur les faisceaux de rayons partiels, également une recollimation des faisceaux de rayons partiels qui se propagent en direction du réseau d'exploration (23.1, 23.2 ; 123 ; 223 ; 323).

5. Dispositif de mesure d'angle optique selon au moins l'une des revendications précédentes, avec lequel les grilles radiales-circulaires combinées (11.1, 11.2 ; 111.1, 111.2 ; 211.1, 211.2 ; 311.1, 311.2) sont disposées en forme d'anneau sur le pourtour du disque gradué (10 ; 110 ; 210 ; 310 ; 410 ; 510) et possèdent sur le pourtour annulaire à chaque fois une période de grille azimutale constante et présentent dans la direction radiale une période de grille radiale variable.

6. Dispositif de mesure d'angle optique selon la revendication 1, avec lequel le miroir (12 ; 112 ; 212 ; 312) est disposé en forme d'anneau sur le pourtour du disque gradué (10 ; 110 ; 210 ; 310 ; 410 ; 510).

7. Dispositif de mesure d'angle optique selon les revendications 5 et 6, avec lequel le disque gradué (10 ; 110 ; 210 ; 310 ; 410 ; 510) se compose de matériau transparent et les grilles radiales-circulaires combinées (11.1, 11.2 ; 111.1, 111.2 ; 211.1, 211.2 ; 311.1, 311.2) sont disposées sur un premier côté et le miroir (12 ; 112 ; 212 ; 312) est disposé sur le deuxième côté opposé, avec sa surface de réflexion orientée en direction du premier côté.

8. Dispositif de mesure d'angle optique selon au moins l'une des revendications précédentes, avec lequel le réseau d'exploration (123 ; 223 ; 323) est réalisé sous la forme d'un réseau d'exploration réfléchissant.

9. Dispositif de mesure d'angle optique selon au moins l'une des revendications 1 à 7, avec lequel une source de lumière (21 ; 321) ainsi que plusieurs éléments détecteurs optoélectroniques (22.1 - 22.3 ; 322.1 - 322.3) sont disposés dans une unité de palpage (20 ; 120 ; 320 ; 420.1 - 420.4 ; 520.1 - 520.4) et le faisceau de rayons émis par la source de lumière (21 ; 321) peut être acheminé au réseau d'exploration (23.1, 23.2 ; 123 ; 223 ; 323) et les faisceaux de rayons partiels superposés peuvent être acheminés aux éléments détecteurs optoélectroniques (22.1 - 22.3 ; 322.1 - 322.3).

10. Dispositif de mesure d'angle optique selon la revendication 9, avec lequel le réseau d'exploration (23.1, 23.2) est en outre disposé dans l'unité de palpage (20) et le disque gradué (10) est monté mobile par rapport à l'unité de palpage (20).

11. Dispositif de mesure d'angle optique selon la revendication 9, avec lequel au moins une unité de palpage (120 ; 420.1 - 420.4 ; 520.1 - 520.4) est disposée de manière à pouvoir coulisser et le disque gradué (110 ; 210 ; 410 ; 510) est monté rotatif par rapport au réseau d'exploration (123 ; 223).

12. Dispositif de mesure d'angle optique selon la revendication 9, avec lequel au moins une unité de palpage (320) conjointement avec le réseau d'exploration (323) est montée avec une mobilité relative par rapport au disque gradué (310) le long d'un axe (X) qui passe par le centre du disque gradué (310) .

13. Dispositif de mesure d'angle optique selon la revendication 9, comprenant plusieurs unités de palpage (420.1 - 420.3) et une pluralité de réseaux d'exploration (424.1 - 424.3) associés aux unités de palpage (420.1 - 420.3), les unités de palpage (420.1 - 420.3) et les réseaux d'exploration (424.1 - 424.3) étant disposés dans différentes positions azimutales par rapport au disque gradué (410).

14. Dispositif de mesure d'angle optique selon la revendication 9, avec lequel le disque gradué (410.1) se compose de plusieurs segments de disque gradué.

15. Dispositif de mesure d'angle optique selon la revendication 9, avec lequel

 - les faisceaux de rayons qui proviennent de l'unité de palpage (320) peuvent être déviés par une unité de déviation en direction du disque gradué (310), et
 - les faisceaux de rayons qui proviennent du disque gradué (310) peuvent être déviés par l'unité de déviation en direction de l'unité de palpage (320).

## Fig. 1

## Fig. 2a

## Fig. 2b

Fig. 3a

23.1    11.1    12    11.2    23.2

P6a
X    P6b    P7

P3    P5a    Z
P5b

P4a
P4b

Fig. 3b

P4a    P5a    P6a

P3    Y    P7

Z

P4b    P5b    P6b

23.1    11.1    12    11.2    23.2

Fig. 4a

Y

P5a

12

X

P5b

Fig. 4b

Y

P4a

11.1

P6a

11.2

X

P4b

P6b

Fig. 4c

Y

23.1

23.2

X

P3

P7

Fig. 5

Fig. 6

Fig. 7

# Fig. 8a

# Fig. 8b

## Fig. 9a

## Fig. 9b

Fig. 10a

Fig. 10b

Fig. 10c

Fig. 11a

Fig. 11b

## Fig. 12a

## Fig. 12b

Fig. 13a

Fig. 13b

Fig. 13c

Fig. 14

Fig. 15

Fig. 16

Fig. 17

Fig. 18

Fig. 19

**IN DER BESCHREIBUNG AUFGEFÜHRTE DOKUMENTE**

**In der Beschreibung aufgeführte Patentdokumente**

- DE 102010029211
- WO 2008138502 A1
- US 6320609 B1